# EUROPEAN PATENT APPLICATION

(11) **EP 4 826 813 A1**
(43) Date of publication of application: **21.10.2026**
(21) Application number: 25738856.1
(22) Date of filing: 03.01.2025
(51) Int. Cl.: H01M 10/04, H01M 10/44, B65D 71/70, B65D 88/02

(54) **TRANSFER TRAY WITH REMARKABLY IMPROVED BATTERY CELL TRANSFER EFFICIENCY AND BATTERY CELL ACTIVATION SYSTEM INCLUDING SAME**

(30) Priority: 11.01.2024 KR 20240004721; 29.01.2024 KR 20240013271
(71) Applicant: Apro Co., Ltd, Anyang-si, Gyeonggi-do 15809 (KR)
(72) Inventor: LIM, Jong Hyun, Gyeonggi-do 14055 (KR); YOON, Sung Sik, Gyeonggi-do 14055 (KR); SON, Yu Jin, Gyeonggi-do 14055 (KR)
(74) Representative: Sander, Rolf
(86) International application number: PCT/KR2025/000071
(87) International publication number: WO 2025/150778

(57) **Abstract**

Disclosed are a transfer tray with significantly improved battery cell transfer efficiency and a battery cell activation system including the same. According to an aspect of the present embodiment, there are provided a transfer tray capable of significantly improving the transfer efficiency of battery cells and a battery cell activation system including the same, capable of significantly reducing the transfer time of battery cells.

## Description

### CROSS-REFERENCE TO RELATED APPLICATION

The present application is a continuation of International Application No. PCT/KR2025/000071 filed on January 3, 2025, which claims priority under 35 U.S.C. §119(a) to Korean Patent Application No. 10-2024-0004721, filed in the Korean Intellectual Property Office on January 11, 2024, and Korean Patent Application No. 10-2024-0013271, filed in the Korean Intellectual Property Office on January 29, 2024, the entire disclosure of which is incorporated herein by reference.

### BACKGROUND

### 1. Technical Field

The present invention relates to a transfer tray with significantly improved battery cell transfer efficiency and a battery cell activation system including the same, which significantly reduces the transfer time of battery cells.

### 2. Related Art

The content described in this section merely provides background information for the present embodiment and does not constitute prior art.

Generally, secondary batteries are capable of recharging and achieving high capacity, and representative examples thereof include nickel-cadmium, nickel-metal hydride, and lithium-ion batteries. Secondary batteries may be manufactured in a flexible pouch type, in which case they have the advantage of a relatively free form factor.

A secondary battery includes a pouch and a battery cell. The secondary battery is provided with a cell pouch in which a battery cell is disposed, and is configured such that a polymer exterior material corresponding to the pouch encloses the battery cell.

Meanwhile, it is necessary to inspect whether the manufactured secondary battery has the electrical characteristics as designed, whether there are any shortcircuited portions in each cell, and the like. Accordingly, the manufactured secondary battery cells are transferred from a cell tray to an activation device and are seated in the activation device to be activated.

At this time, since the secondary battery cells have a considerably thin film form, there is a risk of damage or dislodgement during the transfer process. Accordingly, in the prior art, in transferring the manufactured secondary battery cells from the cell tray to the activation device, only a small number of secondary battery cells have been gripped and transferred at a relatively significantly slow speed. For example, in transferring battery cells to an activation device that seats 36 battery cells at a time for activation, the battery cells have been gripped two at a time from the cell tray and transferred to (and arranged in) the activation device. Accordingly, in order for the activation device to activate the characteristics of the battery cells, the transfer of the battery cells had to be performed a total of 18 times before the activation could proceed. Since the form of the battery cells cannot be changed, the aforementioned problem could not be avoided in the prior art.

### SUMMARY

An embodiment of the present invention has an object of providing a transfer tray capable of significantly improving the transfer efficiency of battery cells and a battery cell activation system including the same.

In addition, an embodiment of the present invention has an object of providing a battery cell activation system capable of significantly reducing the transfer time of battery cells.

According to an aspect of the present embodiment, there is provided a transfer tray for arranging battery cells transferred thereto, the transfer tray comprising: a frame providing a space in which the remaining components within the transfer tray are implemented; a protrusion having a structure protruding in one axial direction of the frame; a support sheet on which battery cells can be arranged; a plurality of support sheet support portions, included in a number that is one more than the number of battery cells to be activated at one time, the plurality of support sheet support portions supporting the support sheet; a guide portion implemented in a form connected to both ends within the frame in the one axial direction of the frame, allowing the support sheet support portions to move therealong; and a restoring member disposed at each support sheet support portion and applying a restoring force to both support sheet support portions connected thereto.

According to an aspect of the present embodiment, the protrusion has a structure protruding in a ' 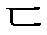 '-shaped (C-shaped) form.

According to an aspect of the present embodiment, the protrusion is implemented on a long axis direction of the frame.

According to an aspect of the present embodiment, the restoring member is implemented of a material having elasticity.

According to an aspect of the present embodiment, the restoring member is implemented as a spring.

According to an aspect of the present embodiment, there is provided a transfer tray for arranging battery cells transferred thereto, the transfer tray comprising: a frame providing a space in which the remaining components within the transfer tray are implemented; a protrusion having a structure protruding in one axial direction of the frame; a support sheet on which battery cells can be arranged; a plurality of support sheet support portions, included in a number that is one more than the number of battery cells to be activated at one time, the plurality of support sheet support portions supporting the support sheet; a guide portion implemented in a form connected to both ends within the frame in the one axial direction of the frame, allowing the support sheet support portions to move therealong; and a restoring member disposed at each support sheet support portion and applying a restoring force to both support sheet support portions connected thereto, wherein the transfer tray is moved at one time by the protrusion being gripped by an external device.

According to an aspect of the present embodiment, the protrusion has a structure protruding in a ' 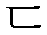 '-shaped (C-shaped) form.

According to an aspect of the present embodiment, the transfer tray further comprises a reinforcing frame connected at one end to the frame and at another end to the protrusion, structurally reinforcing the protrusion.

According to an aspect of the present embodiment, the protrusion is implemented on a long axis direction of the frame.

According to an aspect of the present embodiment, the transfer tray is characterized in that the protrusion is gripped by an external device entering in the long axis direction of the frame.

According to an aspect of the present embodiment, there is provided a transfer tray for arranging battery cells transferred thereto, the transfer tray comprising: a frame providing a space in which the remaining components within the transfer tray are implemented; a protrusion having a structure protruding in one axial direction of the frame; a support sheet on which battery cells can be arranged; a plurality of support sheet support portions, included in a number that is one more than the number of battery cells to be activated at one time, the plurality of support sheet support portions supporting the support sheet; a guide portion implemented in a form connected to both ends within the frame in the one axial direction of the frame, allowing the support sheet support portions to move therealong; and a restoring member disposed at each support sheet support portion and applying a restoring force to both support sheet support portions connected thereto, wherein the transfer tray is moved at one time by the protrusion being gripped by an external device, and the transfer tray is seated as a whole onto an activation device for activating battery cells.

According to an aspect of the present embodiment, the frame is seated on the activation device.

According to an aspect of the present embodiment, the restoring member enables both ends of the frame and the support sheet support portions to be spaced apart from each other.

According to an aspect of the present embodiment, there is provided a battery cell activation system comprising: a cell tray transport device that receives a cell tray storing battery cells that need to be activated, and enables gripping and transfer of the battery cells; a battery cell transfer device that grips and transfers battery cells to be activated from a cell tray disposed at a position proximate thereto by the cell tray transport device; a transfer tray on which the battery cells transferred by the battery cell transfer device are arranged; a battery cell activation device that activates the electrical characteristics of battery cells seated thereon under a preset environment; and a stacker crane that grips the transfer tray and transfers and seats it as a whole onto the battery cell activation device.

According to an aspect of the present embodiment, the cell tray transport device includes a space in which a cell tray can be seated, and includes a transfer means for transferring the seated cell tray.

According to an aspect of the present embodiment, the transfer means is a conveyor belt or a roller.

According to an aspect of the present embodiment, the cell tray transport device receives the cell tray at one position, and moves the cell tray in a clockwise or counterclockwise direction from that position.

According to an aspect of the present embodiment, the cell tray transport device moves the cell tray to a position where the battery cell transfer device can grip the battery cells within the cell tray.

According to an aspect of the present embodiment, the battery cell transfer device grips battery cells from the cell tray and transfers them to the transfer tray.

According to an aspect of the present embodiment, the battery cell transfer device grips battery cells from the cell tray, and then disperses the spacing between the battery cells before transferring them to the transfer tray.

According to an aspect of the present embodiment, the battery cell activation device is included in a plurality.

According to an aspect of the present embodiment, the battery cell activation devices are stacked and arranged in an m×n configuration.

According to an aspect of the present embodiment, the stacker crane moves along three axes, grips the transfer tray, and seats it onto a battery cell activation device at a given position.

As described above, according to an aspect of the present embodiment, by significantly improving the transfer efficiency of battery cells transferred for activation, the process can be simplified, thereby providing the advantage of improving the production yield of battery cells per unit time.

In addition, according to an aspect of the present embodiment, there is an advantage of being able to significantly reduce the transfer time of battery cells.

### BRIEF DESCRIPTION OF THE DRAWINGS

FIG. 1 is a plan view of a battery cell activation system according to an embodiment of the present invention.
FIG. 2 is a front view of a battery cell activation system according to an embodiment of the present invention.
FIG. 3 is a perspective view of a battery cell transfer device according to an embodiment of the present invention.
FIGS. 4, 5A and 5B are perspective views of a battery cell transfer unit according to an embodiment of the present invention.
FIGS. 6A and 6B are enlarged views of a link member and a link member connection portion according to an embodiment of the present invention.
FIG. 7 is a cross-sectional view of a first link member connection portion according to an embodiment of the present invention.
FIG. 8 is a cross-sectional view of a second link member connection portion according to an embodiment of the present invention.
FIGS. 9A-9D are views illustrating a configuration of a battery cell gripper according to an embodiment of the present invention.
FIG. 10 is a perspective view of a transfer tray according to an embodiment of the present invention.
FIG. 11 is a perspective view of a support sheet support portion according to an embodiment of the present invention.
FIG. 12A is a perspective view of a stacker crane according to a first embodiment of the present invention.
FIG. 12B is a perspective view of a stacker crane according to a second embodiment of the present invention.
FIGS. 13A and 13B are views illustrating operation examples of a gripping frame according to a first embodiment of the present invention.
FIG. 13C is a view illustrating a state in which a gripping frame grips a transfer tray according to a first embodiment of the present invention.
FIGS. 14A and 14B are views illustrating operation examples of a gripping frame and a gripping portion according to a second embodiment of the present invention.
FIG. 14C is a view illustrating a state in which a gripping portion grips a transfer tray according to a second embodiment of the present invention.
FIG. 15 is a perspective view of a battery cell activation device according to an embodiment of the present invention.
FIG. 16 is a view illustrating a state in which a transfer tray is seated on a battery cell activation device according to an embodiment of the present invention.
FIG. 17 is a perspective view of a jig plate according to an embodiment of the present invention.
FIG. 18 is a side view of a jig plate on which a transfer tray is seated according to an embodiment of the present invention.
FIG. 19 is a view illustrating a configuration of a battery cell gripper according to another embodiment of the present invention.
FIGS. 20A and 20B are enlarged views of a portion of a battery cell gripper according to another embodiment of the present invention.
FIG. 21 is a view illustrating a configuration of a battery cell gripper according to yet another embodiment of the present invention.

### DETAILED DESCRIPTION

Since the present disclosure may have various changes and various embodiments, specific embodiments are illustrated and described in the accompanying drawings. However, it should be understood that it is not intended to limit specific embodiments, and it should be understood to include all modifications, equivalents, and substitutes included in the spirit and scope of the present invention. Like reference numerals have been used for like components throughout the description of each drawing.

Terms such as first, second, A, B, and the like may be used to describe various components, but the components should not be limited by the terms. The terms are used only for the purpose of distinguishing one component from another. For example, a second component may be referred to as a first component, and similarly, the first component may also be referred to as the second component without departing from the scope of the present disclosure. The term "and/or" includes a combination of a plurality of related listed items or any of the plurality of related listed items.

When a first component is described as being "connected" or "coupled" to a second component, it should be understood that the first component may be directly connected or coupled to the second component or a third component may be present therebetween. On the other hand, when a certain component is described as being "directly connected" or "directly coupled" to another component, it should be understood that still another component is not present therebetween.

The terms used in the present application are only used to describe specific embodiments and are not intended to limit the present invention. The singular includes the plural unless the context clearly dictates otherwise. It should be understood that the term such as "comprise," "have," or the like in this application does not preclude the possibility of the presence or addition of features, numbers, steps, operations, components, parts, or a combination thereof in advance.

Unless defined otherwise, all terms used herein, including technical or scientific terms, have the same meaning as commonly understood by those skilled in the art to which the present disclosure pertains.

Terms such as those defined in a commonly used dictionary should be construed as having a meaning consistent with the meaning in the context of the related art and should not be construed in an ideal or excessively formal meaning unless explicitly defined in the application.

In addition, each component, procedure, process, method, or the like included in each embodiment of the present disclosure can be shared within the range in which there is no contradiction in terms of technology.

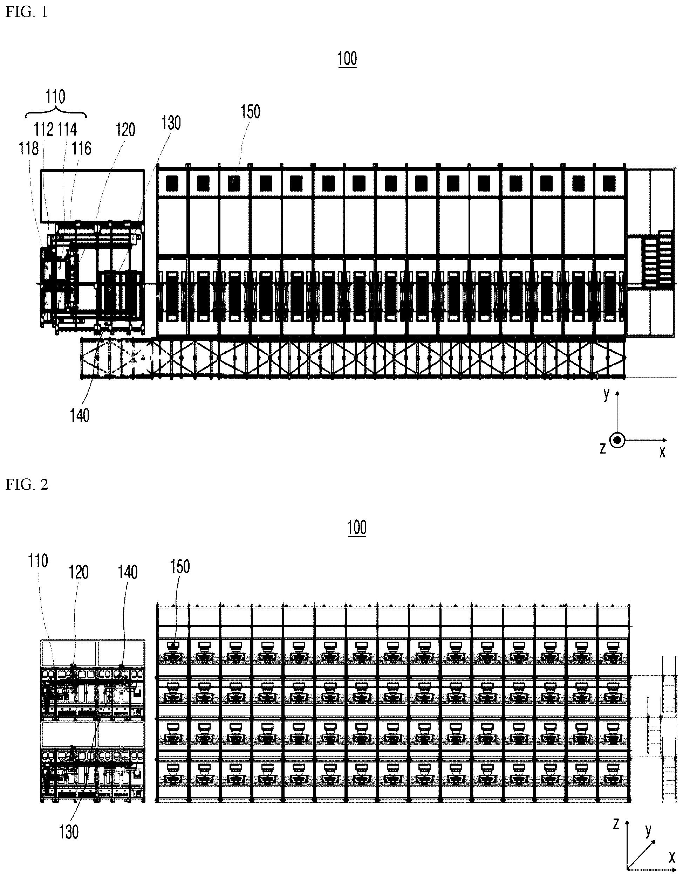

FIG. 1 is a plan view of a battery cell activation system according to an embodiment of the present invention, and FIG. 2 is a front view of a battery cell activation system according to an embodiment of the present invention.

Referring to FIGS. 1 and 2, the battery cell activation system 100 according to an embodiment of the present invention includes a cell tray transport device 110, a battery cell transfer device 120, a transfer tray 130, a stacker crane 140, a battery cell activation device 150, and a control device (not shown).

The battery cell activation system 100 activates battery cells, particularly battery cells loaded into pouch-type batteries. The battery cell activation system 100 applies a preset pressure and temperature to the battery cells. The battery cell activation system 100 causes each battery cell to repeatedly charge and discharge under the applied temperature and pressure, thereby imparting or activating the electrical characteristics of the battery cells.

At this time, in transferring the battery cells within the cell tray transported from the cell tray transport device 110 to the battery cell activation device 150 for activation, the battery cell activation system 100 does not individually transfer the battery cells one by one, but rather uses the transfer tray 130 to transfer all battery cells to be activated at one time. Since the battery cells to be activated are seated in the transfer tray 130 and transferred, damage or dislodgement during the transfer process can be fundamentally prevented. In addition, since there is no risk of damage or dislodgement of the battery cells during the transfer process, the battery cell activation system 100 can transfer the battery cells to the battery cell activation device 150 for activation at a significantly faster speed compared to the prior art.

The cell tray transport device 110 receives a cell tray storing battery cells that need to be activated, and enables the battery cell transfer device 120 to grip and transfer them. The cell tray transport device 110 includes a space in which a cell tray can be seated, and includes a transfer means for transferring the seated cell tray, such as a conveyor belt or a roller. Accordingly, the cell tray transport device 110 receives the aforementioned cell tray at one position (112 or 118), and moves the received cell tray in a clockwise direction (when received at 112, in the direction of 114, 116, 118) or a counterclockwise direction (when received at 118, in the direction of 116, 114, 112) from that position. For example, a description will be given assuming a situation in which a cell tray is received at a first position 118 within the cell tray transport device 110. When a cell tray is received at the first position 118, the cell tray transport device 110 moves it to a second position 116, which is a position where the battery cell transfer device 120 can grip the battery cells within the cell tray. An empty cell tray from which the battery cells have been transferred moves to a third position 114 and a fourth position 112, and is discharged to the outside. If a cell tray is received at the fourth position 112 within the cell tray transport device 110, the reverse applies.

When a cell tray is received at or discharged from the first position 118 or the fourth position 112 of the cell tray transport device 110, this may proceed in a manner in which the cell tray is placed at the respective position and then raised or lowered. For example, assuming that a cell tray is received at the first position 118 and discharged at the fourth position 112, the first position 118 of the cell tray transport device 110 may initially be in a lowered state. Thereafter, when a cell tray containing battery cells for activation moves to the first position 118, the first position 118 of the cell tray transport device 110 is raised. The cell tray transport device 110 raises the first position 118, and then moves the cell tray to the second position 116. Conversely, when an empty cell tray moves to the fourth position 112, the cell tray transport device 110 lowers the fourth position 112 to discharge the empty cell tray to the outside.

The battery cell transfer device 120 grips and transfers battery cells to be activated from a cell tray disposed at a position (114 or 116) proximate thereto.

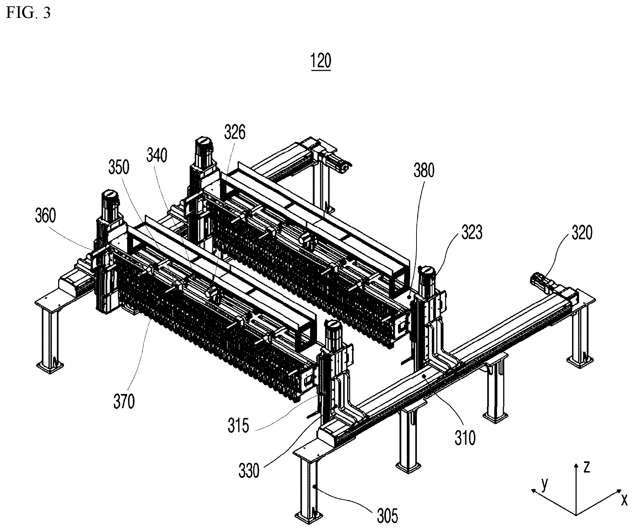

The battery cell transfer device 120 grips battery cells that are arranged in a relatively dense manner within the cell tray, disperses the battery cells at an appropriate spacing, and transfers them to the transfer tray 130. A description of each component of the battery cell transfer device 120 will be provided later with reference to FIGS. 3 through 9 and FIGS. 19 through 21.

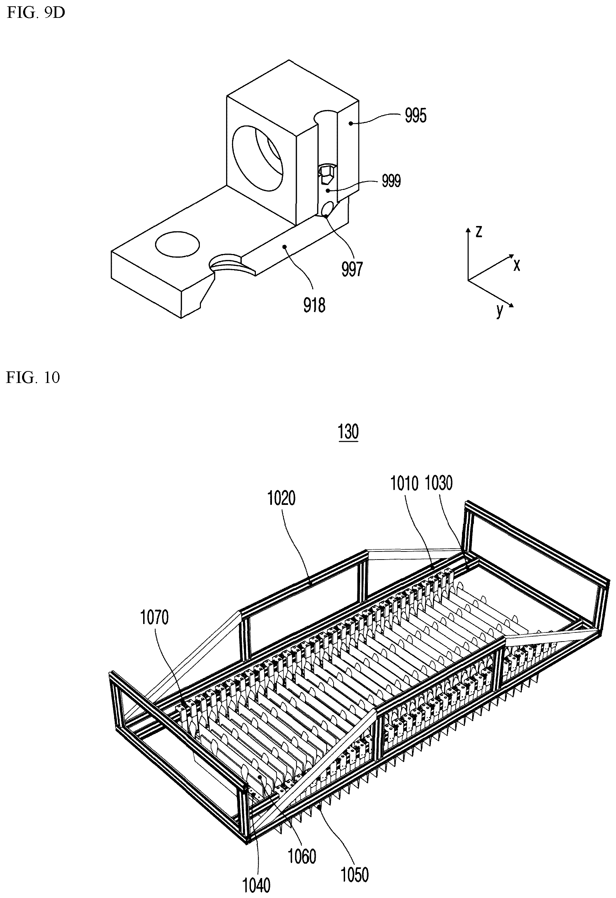

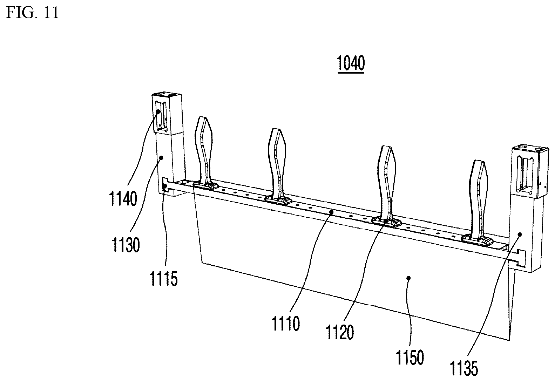

The transfer tray 130 arranges the battery cells transferred by the battery cell transfer device 120. The transfer tray 130 arranges the battery cells (requiring activation) in its interior, and arranges them in the same state as the battery cells should be arranged for activation in the battery cell activation device 150. Accordingly, when the transfer tray 130 is transferred as a whole by the stacker crane 140 and seated onto the battery cell activation device 150, the battery cell activation device 150 can activate all the battery cells arranged in the transfer tray 130 as they are. As the battery cells are arranged in the transfer tray 130, all the battery cells requiring activation can be transferred collectively, and damage or dislodgement may not occur during the transfer process. The specific structure of the transfer tray 130 will be described later with reference to FIGS. 10 and 11.

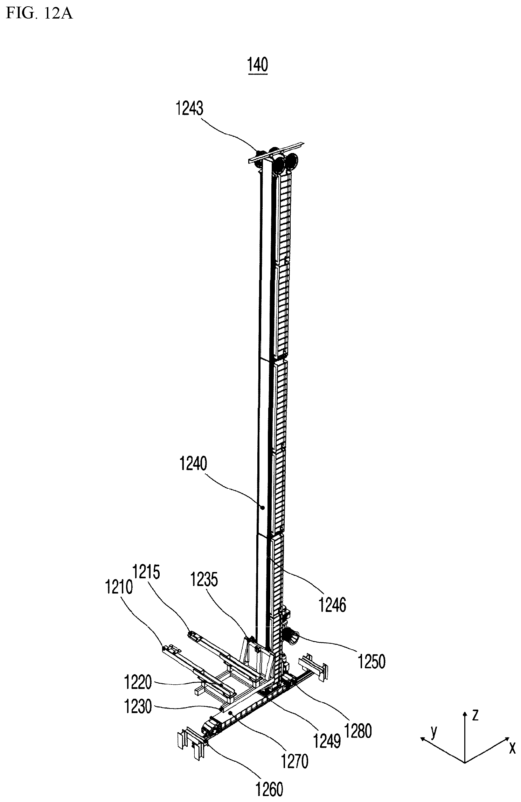

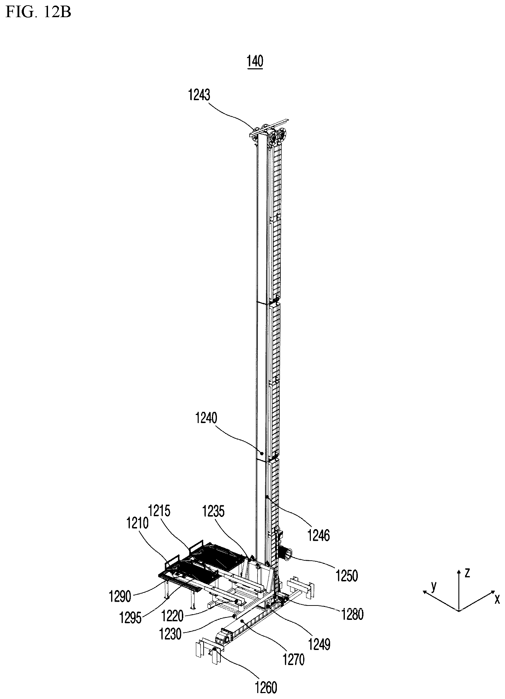

The stacker crane 140 grips the transfer tray 130 and transfers it as a whole to the battery cell activation device 150. The stacker crane 140 reciprocates between the position where the transfer tray 130 is disposed and the positions where each battery cell activation device 150 is disposed, and transfers the transfer tray 130 to each battery cell activation device 150. As shown in FIGS. 1 and 2, each battery cell activation device 150 is disposed within a predetermined space, and may be stacked and arranged in an m×n configuration. The stacker crane 140 moves along three axes, grips the disposed transfer tray 130, and seats the gripped transfer tray 130 onto a battery cell activation device at an appropriate position. The specific structure of the stacker crane 140 will be described later with reference to FIGS. 12 through 14.

The battery cell activation device 150 creates a preset environment for a plurality of seated battery cells and activates their electrical characteristics. The battery cell activation device 150 receives each transfer tray 130 transferred by the stacker crane 140. Since the transfer tray 130 is received by the stacker crane 140 that moves along three axes, the battery cell activation device 150 does not need to be disposed only on a single plane as in the prior art, but can be disposed in a stacked configuration. Accordingly, unlike the prior art where the battery cell activation device 150 occupied an excessively large area in order to activate battery cells in parallel, a plurality of battery cells can be simultaneously activated even in a relatively small area.

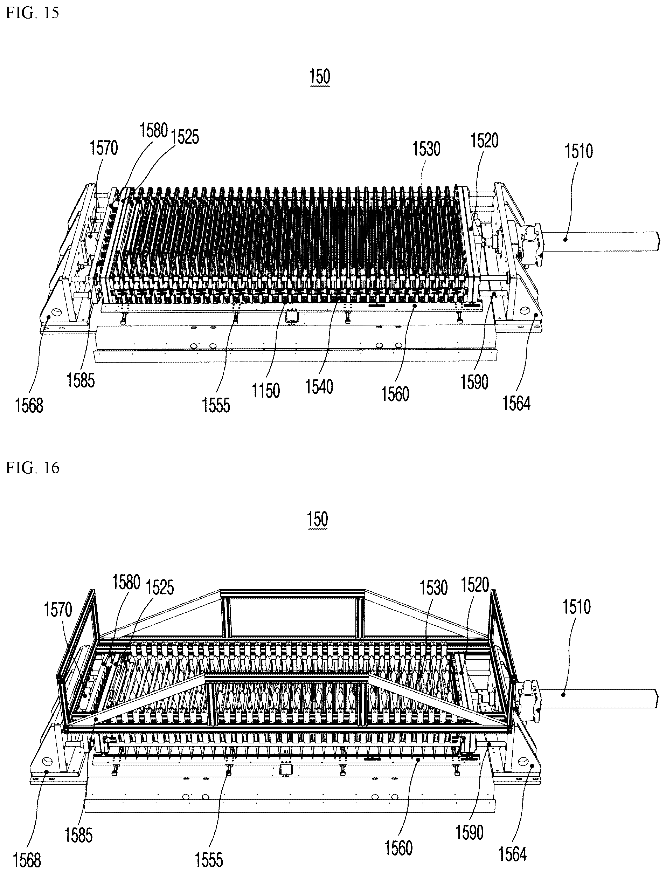

The battery cell activation device 150 electrically connects to the seated battery cells, and then applies a preset magnitude of pressure and a preset temperature to the battery cells. The battery cell activation device 150 can apply relatively uniform pressure and temperature to each battery cell compared to the prior art. In a state where pressure is applied to each battery cell, the battery cell activation device 150 supplies power to each battery cell. The battery cell activation device 150 repeatedly charges and discharges the battery cells under the aforementioned conditions. When the battery cells repeatedly undergo charging and discharging in the corresponding environment, the battery cells are imparted with electrical characteristics and are activated. The battery cell activation device 150 activates the battery cells by performing the aforementioned operations. A description of each component of the battery cell activation device 150 will be provided later with reference to FIGS. 15 through 18.

The control device (not shown) controls the aforementioned operations of each component within the battery cell activation system 100.

FIG. 3 is a perspective view of a battery cell transfer device according to an embodiment of the present invention.

Referring to FIG. 3, the battery cell transfer device 120 according to an embodiment of the present invention includes a first rail 310, a second rail 315, a first motor 320, a second motor 323, a third motor 326, a guide body 330, a screw 340, a nut 350, a first shaft 360, a battery cell transfer unit 370, and a fixed frame 380.

The first rail 310 is formed along an axis (x-axis, hereinafter referred to as a 'first axis') connecting the cell tray transport device 110 and the disposed transfer tray 130. The first rail 310 is disposed on a support 305 having a preset height (in the z-axis direction), and allows the guide body 330 to move along the first axis therealong.

The first rail 310 is provided as two rails disposed facing each other, so that both guide bodies 330 can be disposed on the respective first rails 310. The respective first rails 310 are spaced apart from each other so that the fixed frame 380, the second rail 315, and the guide body 330 can be disposed therebetween. The respective first rails 310 also dispose the fixed frame 380 and the battery cell transfer unit 370 connected thereto by disposing the guide body 330.

The second rail 315 is connected to one surface of the guide body 330, and is formed along an axis (z-axis, hereinafter referred to as a 'second axis') in which the fixed frame 380 connected thereto moves closer to or farther from the cell tray disposed at the second position 116 or the third position 114 of the cell tray transport device 110, or the transfer tray 130. The second rail 315 is connected at one surface to one surface of the guide body 330, and moves together with the guide body 330 that moves along the first rail 310. Meanwhile, the second rail 315 is connected at another surface to the fixed frame 380, so that the fixed frame 380 and the battery cell transfer unit 370 connected thereto can move in the first axis direction together with the guide body 330. At the same time, the second rail 315 allows the fixed frame 380 and the battery cell transfer unit 370 to move along the second axis thereon.

The second rail 315 is also provided as two rails disposed facing each other, so that the fixed frame 380 can be disposed on the respective second rails 315. The second rails 315 are spaced apart by the length of the fixed frame 380 (in the second axis direction), so that the fixed frame 380 and the battery cell transfer unit 370 connected thereto can be disposed therebetween.

The first motor 320 supplies power enabling the guide body 330 to move along the first axis on the first rail 310. The first motor 320 may be disposed on each of the first rails 310, and the two motors may be interlocked with each other to supply the same magnitude of power.

The second motor 323 supplies power enabling the fixed frame 380, which is connected to one surface of the second rail 315, to be raised and lowered along the second axis. The second motor 323 may also be disposed on each of the second rails 315, and the two motors may be interlocked with each other to supply the same magnitude of power.

The third motor 326 supplies power for moving two battery cell transfer units 370 closer to or farther from each other along the first shaft 360 (moving in the first axis direction).

The guide body 330 is connected at one surface to the first rail 310 and at another surface to the second rail 315, and moves the second rail 315 along the first axis. For example, the guide body 330 is implemented in an 'L'-shaped configuration, and is connected at a lower surface (the surface facing the activation device or the tray) to the first rail 310 and at a side surface to the second rail 315. In particular, a guide portion (not shown) capable of moving along the first rail 310 is formed on the lower surface of the guide body 330, so that it can receive power from the first motor 320 and move along the first axis. Meanwhile, since the guide body 330 is connected at another surface to the second rail 315, it moves the second rail 315 and the fixed frame 380 moving on the second rail 315 together along the first axis. Accordingly, the fixed frame 380 and the battery cell transfer unit 370 connected thereto can be moved by the guide body 330 along the first axis so as to approach the tray or approach the battery cell activation device 150.

The screw 340 and the nut 350 receive power from the third motor 326, and cause the respective battery cell transfer units 370 to move farther from or closer to each other along the first axis.

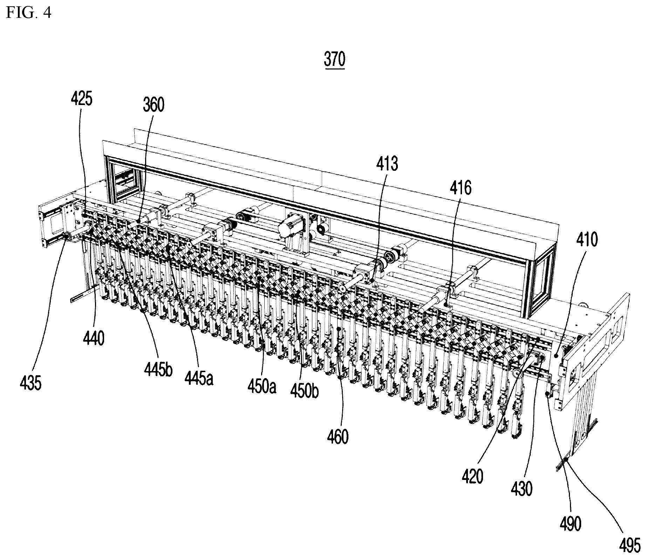

The screw 340 receives power from the third motor 326 and rotates. The screw 340 is disposed on the fixed frame 380 and is fixed so as not to deviate from its position but to be able to rotate. Meanwhile, the nut 350 is positioned on the screw 340 at a location outer (farther from the center) than a connection portion 413 (described later with reference to FIG. 4) within the battery cell transfer unit 370, with respect to the center of the screw 340, and moves closer to or farther from the center of the screw 340 by the rotation of the screw 340. The connection portion 413 within the battery cell transfer unit 370 is disposed at a position on the screw 340, and moves together with the movement of the nut 350.

The first shaft 360 is disposed on the fixed frame 380 coaxially with the screw 340 and supports the battery cell transfer unit 370. The connection portion 416 within the battery cell transfer unit 370 is mounted on the first shaft 360. The connection portion 416 moves on the first shaft 360 together with the movement of the battery cell transfer unit 370 (caused by the nut 350). Accordingly, the weight of the battery cell transfer unit 370 is not entirely applied only to the screw 340, but is distributed between the first shaft 360 and the screw 340. The first shaft 360 shares in supporting the weight of the battery cell transfer unit 370, thereby increasing the lifespan of the screw 340.

The battery cell transfer unit 370 moves along the first axis by the guide body 330 and along the second axis by the fixed frame 380, and grips and transfers battery cells within the tray or the battery cell activation device 150. The battery cell transfer unit 370 moves along the first axis by the guide body 330 moving along the first rail 310, and along the second axis by the fixed frame 380 moving along the second rail 315. Accordingly, the battery cell transfer unit 370 can move to the tray containing battery cells for activation or to the battery cell activation device 120 in which activation has been completed.

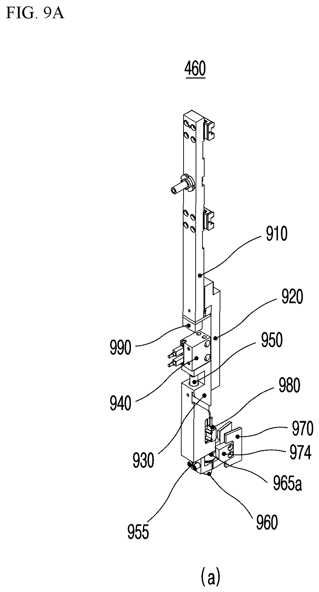

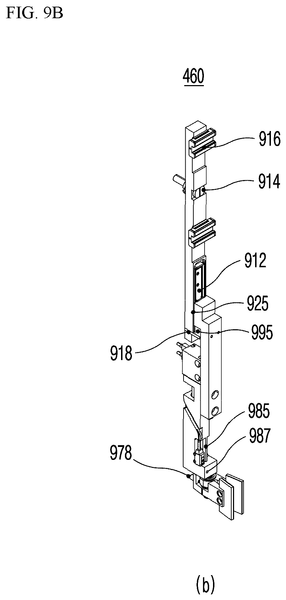

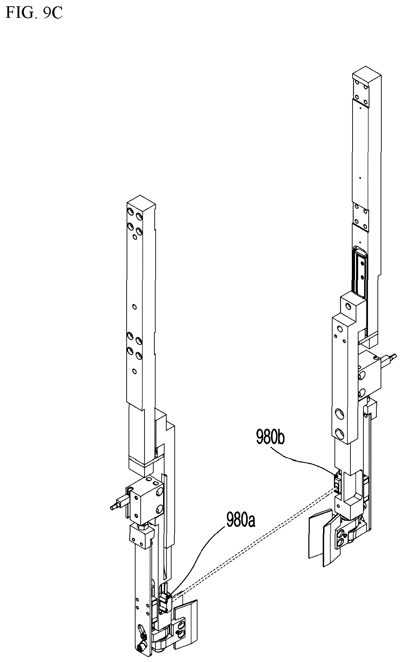

Meanwhile, the battery cell transfer unit 370 is connected to the screw 340 and the first shaft 360, and grips battery cells. The battery cell transfer unit 370 moves to the cell tray or the transfer tray 130 according to the operations of the aforementioned components. However, the battery cells arranged in both are arranged at different widths (length in the direction of an axis perpendicular to both the first axis and the second axis). Accordingly, the battery cell transfer unit 370 can move each gripper (Gripper, described later with reference to FIG. 9) along an axis perpendicular to both the first axis and the second axis (y-axis, hereinafter referred to as a 'third axis') in order to grip the battery cells within the cell tray or to arrange the gripped battery cells on the transfer tray 130. Since the spacing between the battery cells within the tray or the battery cell activation device 150 is respectively determined, each gripper is disposed at a spacing identical to each respective spacing to grip each battery cell. A detailed description of the battery cell transfer unit 370 will be provided later with reference to FIG. 9 and FIGS. 19 through 21.

The fixed frame 380 is connected to each second rail 315, and fixes the screw 340, the nut 350, the first shaft 360, and the battery cell transfer unit 370. The fixed frame 380 is connected to each second rail 315 between the second rails 315, and moves along the second axis along the second rail 315 and along the first axis along the guide body 330 connected to the second rail 315. The fixed frame 380 moves along each axis and moves the components fixed thereto together with itself.

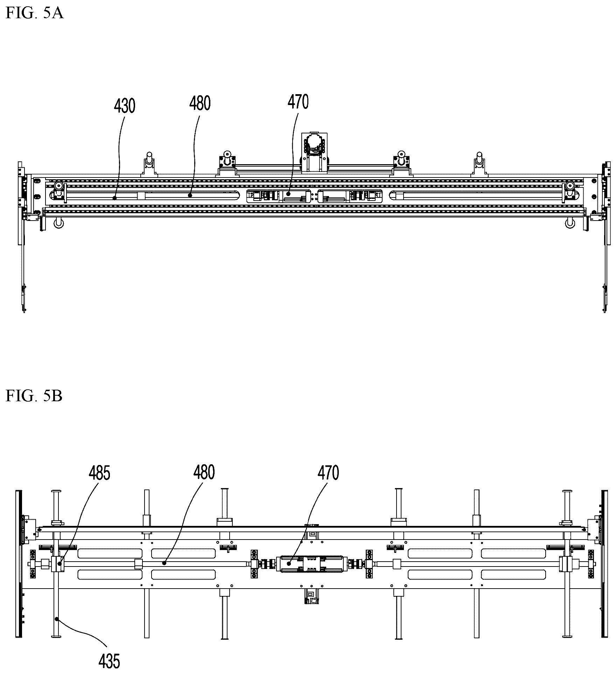

FIGS. 4 and 5 are perspective views of a battery cell transfer unit according to an embodiment of the present invention.

Referring to FIGS. 4, 5A, and 5B, the battery cell transfer unit 370 according to an embodiment of the present invention includes a frame 410, a first connection portion 413, a second connection portion 416, rails 420 and 425, a sliding groove 430, a sliding coupling portion 435, a first link member connection portion 440, a second link member connection portion 445, a link member 450, a battery cell gripper 460, a motor 470, a screw 480, a nut 485, a first sensor 490, and a second sensor 495.

The frame 410 provides a space in which each component within the battery cell transfer unit 370 is positioned or operates, and is connected to the fixed frame 380 to support each component within the battery cell transfer unit 370.

The frame 410 is provided as two frames positioned to face each other with respect to the fixed frame 380, so that two battery cell transfer units 370 including itself can be disposed facing each other with respect to the fixed frame 380.

The first connection portion 413 is a structure protruding from the frame 410 toward the fixed frame 380, and is coupled with the screw 340 to move the battery cell transfer unit 370 along the first axis. The first connection portion 413 is implemented in a shape that can be coupled with the screw 340, for example, a shape including a hollow (not shown) having a cross-sectional area equal to or greater than the cross-sectional area of the screw 340, and is thereby connected to the screw 340. The first connection portion 413 is coupled with the screw 340, and allows itself 413 and the entire frame 410 to move accordingly by the operation of the screw 340 and the nut 350. Accordingly, the first connection portion 413 moves the battery cell transfer units 370 facing each other in a direction of moving closer to or farther from each other.

The second connection portion 416 is a structure protruding from the frame 410 toward the fixed frame 380, like the first connection portion 413, and is coupled with the first shaft 360 to share in supporting the weight of the battery cell transfer unit 370. The second connection portion 416 is coupled with the first shaft 360, and moves on the first shaft 360 together with the movement of the first connection portion 413. The second connection portion 416 does not move by separate power, but moves passively by the movement of the first connection portion 413. The second connection portion 416 is coupled with the first shaft 360, and distributes and supports the weight of the battery cell transfer unit 370 together with the first connection portion 413.

The rails 420 and 425 are formed on the frame 410 at positions corresponding to each other with respect to the sliding groove 430, and prevent the dislodgement of the battery cell gripper 460 and move it. The battery cell gripper 460 is connected to the rails 420 and 425 by a guide portion 916 (described later with reference to FIG. 9), and moves along the third axis along the rails 420 and 425. That is, each gripper 460 moves in the same direction along the third axis, and moves in a direction of moving closer to or farther from each other.

However, only one pair of rails is not formed within the frame 410, and two or more pairs of rails may be formed. As described above, the guide portion 916 within the battery cell gripper 460 is connected to the rail and moves on the rail. However, in order to grip the battery cells arranged within the tray, the spacing between each battery cell gripper 460 must become considerably narrow. The spacing between each battery cell gripper 460 may need to become even narrower than the guide portion 916. At this time, if only one pair of rails is formed within the frame 410, a problem arises in which each battery cell gripper 460 cannot achieve the spacing required to grip the battery cells arranged within the tray. To address this, two or more pairs of rails are formed within the frame 410, and adjacent battery cell grippers 460 are connected by the guide portion 916 to different rails and move on the respective rails. Accordingly, any spacing between each battery cell gripper 460 is acceptable.

The sliding groove 430 is formed within the frame 410 along the third axis, and allows the sliding coupling portion 435 to move along the third axis within itself.

The sliding coupling portion 435 moves closer to or farther from each other within the sliding groove 430 by the operation of the motor 470, the screw 480, and the nut 485. The screw 480 is disposed along the third axis, and the nut 485 is disposed on the screw 480 and is coupled with a portion of the sliding coupling portion 435 to move together therewith. When power is supplied from the motor 470, the screw 480 rotates, and the sliding coupling portion 435 moves closer to or farther from each other along the sliding groove 430 according to the rotation of the screw 480. A portion of the sliding coupling portion 435 passes through the sliding groove 430 and protrudes from the interior of the frame 410 (in the direction in which both frames face each other) to the exterior of the frame 410 (in the direction in which both frames do not face each other). As the sliding coupling portion 435 protrudes, the link member can be connected to the protruding portion of the sliding coupling portion 435.

The first link member connection portion 440 has a hinge structure and fixes the link member 450 and the battery cell gripper 460, so that the link member 450 performs rotational movement. The first link member connection portions 440 at both ends close to the sliding coupling portion 435 are coupled with the link member 450 and the battery cell gripper 460 and are connected to the sliding coupling portion 435. Accordingly, the first link member connection portion 440 receives a force in the third axis direction from the sliding coupling portion 435 and transmits it to the link member 450 and the battery cell gripper 460.

Meanwhile, the second link member connection portion 445 has a hinge structure and is respectively coupled with the link members 450a and 450b, so that the link member 450 performs rotational movement.

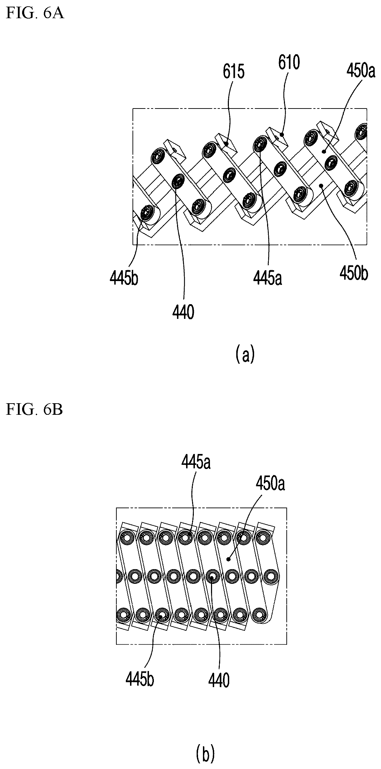

The link members 450a and 450b are disposed as a pair crossing in an 'X' shape, and the first link member connection portion 440 is coupled at the intersection (center portion) of both members, and the second link member connection portion is coupled at each end of the link member 450. A more specific structure will be described with reference to FIGS. 6 through 8.

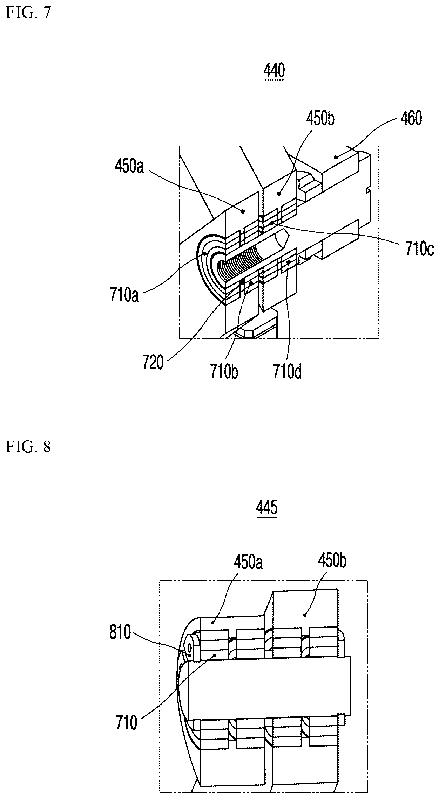

FIG. 6 is an enlarged view of a link member and a link member connection portion according to an embodiment of the present invention, FIG. 7 is a cross-sectional view of a first link member connection portion according to an embodiment of the present invention, and FIG. 8 is a cross-sectional view of a second link member connection portion according to an embodiment of the present invention.

Referring to FIGS. 6A and 6B, the link member 450 and the link member connection portions 440 and 445 are coupled in this manner. When the first link member connection portion 440 receives an external force in the third axis direction from the sliding coupling portion 435, it causes the respective link members 450 coupled to the first link member connection portion 440 to perform rotational movement. The link members 450 perform rotational movement so as to move farther from each other (the mutual angle increases) or closer to each other. For example, when the link members 450 coupled to the first link member connection portion 440 move so as to be farther from each other, the respective link members connected to the second link member connection portion 445 move closer to each other (the mutual angle decreases). As such, as the link members connected to the first link member connection portion 440 move farther from each other and the link members connected to the second link member connection portion 445 move closer to each other, the sliding coupling portions 435 move closer to each other, and the spacing between the respective battery cell grippers 460 coupled to the first link member connection portion 440 decreases. Conversely, when the link members 450 coupled to the first link member connection portion 440 move so as to be closer to each other, the respective link members connected to the second link member connection portion 445 move farther from each other. As such, as the link members connected to the first link member connection portion 440 move closer to each other and the link members connected to the second link member connection portion 445 move farther from each other, the sliding coupling portions 435 move farther from each other, and the spacing between the respective battery cell grippers 460 coupled to the first link member connection portion 440 increases. As the link member 450 and the respective link member connection portions 440 and 445 are coupled as described above, the spacing between the respective battery cell grippers 460 is adjusted using the force transmitted from the sliding coupling portion 435.

At this time, since the respective link members 450 are coupled by crossing in an 'X' shape, at any link member connection portion 440 or 445, a link member 450b disposed relatively closer to the frame 410 and a link member 450a disposed farther from the frame 410 are distinguished. Here, the link member 450b includes a protrusion 610 protruding at both ends in a direction toward the link member 450a (a direction away from the frame 410). A coupling hole 615 into which a coupling member (not shown) such as a screw can be coupled is formed within the protrusion 610. A coupling member (not shown) is coupled to the coupling hole 615, and the coupling member (not shown) comes into physical contact with the link member 450a connected to the second link member connection portion 445. Using this, the coupling member (not shown) coupled to the coupling hole 615 can adjust the degree to which the link member 450a rotates at the second link member connection portion 445. Even with the link member 450 and the link member connection portions 440 and 445 manufactured through the same process conditions and in the same environment, a tolerance of a microscopic magnitude is inevitably generated. Due to this, even when each battery cell gripper 460 is adjusted to be as close as possible (with the sliding coupling portions 435 moving as close to each other as possible), the spacing between each battery cell gripper 460 may differ minutely due to the aforementioned tolerance. This may not be critical when the spacing between battery cells is above a certain level, such as in the battery cell activation device 150. However, when the spacing between battery cells is below a certain level, such as the spacing between battery cells arranged within the tray, the aforementioned error can be critical. To address this, the link member 450b includes the protrusion 610 and the coupling hole 615, and a coupling member (not shown) can be coupled to each coupling hole 615 to a preset depth. Here, the preset depth refers to a depth at which the spacing between the first link member connection portions 440 becomes identical to each other when the link members coupled to the second link member connection portion 445 move closer to each other. The depth to which the coupling member (not shown) is coupled to the coupling hole 615 in each link member 450b may differ from each other. Accordingly, even if tolerances occur in each component during the manufacturing process, they can be addressed by coupling the coupling member (not shown) to each coupling hole 615 to a preset depth.

Meanwhile, the first link member connection portion 440 is coupled with the link member 450 and the battery cell gripper 460 as shown in FIG. 7.

Referring to FIG. 7, the first link member connection portion 440 is connected to the respective link members 450a and 450b by bearings 710a through 710d, and a spacer 720 is disposed for each of the bearings 710a through 710d. The first link member connection portion 440 includes the bearings 710 and the spacers 720, so that no tolerance (play) occurs in the rotational axis direction.

Conversely, the second link member connection portion 445 is coupled with the respective link members 450a and 450b as shown in FIG. 8.

Referring to FIG. 8, the second link member connection portion 445 also includes bearings 710 and is connected to the link member 450, but instead of including spacers, includes a stopper 810 at the outermost position (the direction farthest from the frame) to prevent dislodgement of the bearings 710.

As such, since the link member connection portions 440 and 445 have different forms from each other, the following advantages are obtained. Since the first link member connection portion 440 couples not only the link member but also the battery cell gripper 460, it does not allow any movement in the rotational axis direction. However, when the bearings 710 continuously rotate and operate without any play in this manner, cases where the bearings 710 are worn or damaged may occur.

Conversely, since the second link member connection portion 445 has play in the axial direction, not only is the wear and damage as in the first link member connection portion 440 avoided, but it can also buffer the reduction in lifespan due to fatigue occurring in the bearings 710 within the first link member connection portion 440.

Referring again to FIGS. 4 and 5, the battery cell gripper 460 is implemented in a plurality (as many as the number of battery cells) to grip the respective battery cells. The specific structure of the battery cell gripper 460 will be described later with reference to FIG. 9 and FIGS. 19 through 21.

The motor 470, the screw 480, and the nut 485 perform the aforementioned operations and move the sliding coupling portion 435 along the third axis within the sliding groove 430. According to the movement of the sliding coupling portion 435, the link members 450 rotate by the link member connection portions 440 and 445, thereby adjusting the spacing between the respective battery cell grippers 460.

The first sensor 490 senses whether the battery cell gripper 460 has completely gripped a battery cell. The first sensor 490 determines whether a second frame 920 (described later with reference to FIG. 9 and FIGS. 19 through 21) has risen above a preset height. The first sensor 490 is disposed at both ends of the frame 410, and at a preset height (in the second axis direction) based on when the second link frame 920 is at its lowest position, one of them emits light and the other receives light. When the battery cell gripper 460 grips a battery cell without any abnormality, the second link frame 920 descends along the slide rail 912 (described later with reference to FIG. 9) due to the weight of the battery cell. The second link frame 920 maintains the descended state along the slide rail 912 as long as there is no abnormality. Conversely, when the battery cell gripper 460 collides with a battery cell or other components, the second link frame 920 may rise. The first sensor 490 detects such an abnormal rise of the second link frame 920 within the battery cell gripper 460, and determines whether the battery cell gripper 460 has completely gripped the battery cell or whether an abnormality has occurred.

The second sensor 495, conversely, senses whether the battery cell gripper 460 is gripping a battery cell. The second sensor 495 is also disposed at both ends of the frame 410, like the first sensor 490, and one of them emits light and the other receives light. However, unlike the first sensor 490, the second sensor 495 transmits and receives light at a position relatively lower than the height at which the battery cell can be positioned in the second axis direction when the battery cell gripper 460 has gripped a battery cell. The second sensor 495 transmits and receives light at the corresponding height, and senses whether the battery cell gripper 460 drops the battery cell it is gripping.

FIG. 9 is a view illustrating a configuration of a battery cell gripper according to an embodiment of the present invention.

Referring to FIG. 9, the battery cell gripper 460 according to an embodiment of the present invention includes first through third link frames 910 through 930, a slide rail 912, a link member fixing pin 914, a guide portion 916 and 925, a stopper support portion 918, an actuator 940, a cylinder 950, a hinge shaft 960, a bearing 965, a grip portion 970, a grip body 974, a grip protrusion 978, an angle detection sensor 980, an angle adjustment shaft 985, a sensor fixing hole 987, a first stopper 990, and a second stopper 995.

The first link frame 910 is connected to the rails 420 and 425, and supports the remaining components within the battery cell gripper 460. The first link frame 910 uses the guide portion 916 so that the battery cell gripper 460 is connected to the rails 420 and 425 and can move along the third axis along the rails.

The third link frame 930 supports the components capable of gripping a battery cell within the battery cell gripper 460.

The second link frame 920 connects the first link frame 910 and the third link frame 930.

The slide rail 912 is formed within the first link frame 910, and allows the second link frame 920 to be raised and lowered (along the second axis) along the guide portion 925. The second link frame 920 normally has a descended state due to its own weight or, when the grip portion 970 has gripped a battery cell, due to the combined weight including the battery cell.

However, when the grip portion 970 fails to grip a battery cell and collides with a battery cell or other components, the second link frame 920 rises along the slide rail 912. If the slide rail 912 did not exist, when the grip portion 970 collides with other components, the impact force would be transmitted directly to the respective components. This may cause damage to the grip portion 970 or other components (such as battery cells). The slide rail 912 prevents damage to the respective components in the aforementioned situation.

As shown in FIG. 9C, the link member fixing pin 914 protrudes in the direction in which the first link member connection portion 440 is coupled to the battery cell gripper 460, and fixes the first link member connection portion 440 to the battery cell gripper 460. Accordingly, the first link member connection portion 440 can couple the link member 450 and the battery cell gripper 460.

The guide portion 916 is connected to the rails 420 and 425, and moves the first link frame 910 and all components connected to or formed on the first link frame 910 on the rail (along the third axis).

The stopper support portion 918 is formed at the end of the first link frame 910 far from the rails 420 and 425, and provides a space in which the stoppers 990 and 995 are to be disposed. The stopper support portion 918 disposes and supports the stoppers 990 and 995.

The actuator 940 is connected to the cylinder 950, and raises or lowers the cylinder 950 (along the second axis) so as to move closer to or farther from the grip protrusion 978. The actuator 940 is implemented as a pneumatic cylinder or the like, and supplies power enabling the cylinder 950 connected thereto to be raised and lowered.

The cylinder 950 is positioned within the third link frame 930, and receives power from the actuator 940 to be raised and lowered. The cylinder 950 is disposed within a guide tube (not shown) formed within the third link frame 930 to have a cross-sectional area equal to or greater than its own cross-sectional area, and is raised and lowered without dislodgement. Meanwhile, the end 955 of the cylinder 950 closest to the grip protrusion 978 is implemented in a wedge shape. As the corresponding end 955 of the cylinder 950 is implemented in a wedge shape, the cylinder 950 can smoothly enter between the grip protrusions 978 without resistance as it descends.

At this time, the cylinder 950, particularly the end 955 having a wedge shape, may be implemented of a heat-treated material. In the prior art, the cylinder 950 has been implemented of resin gel or a non-heat-treated material, which had a problem of rapid wear progression due to contact with the grip protrusion and the like over a large number of times. To prevent this, the cylinder 950, particularly the end 955, is implemented of a heat-treated material to minimize wear.

The hinge shaft 960 allows the grip body 974 to rotate about itself. The hinge shaft 960 is positioned at a point of the grip body 974 and operates the grip body 974 on a lever principle. That is, when the grip protrusion 978 is spread apart by the end 955 of the cylinder, the spacing between the grip portions 970 narrows, and when the end 955 of the cylinder withdraws and the spacing between the grip protrusions 978 narrows, the spacing between the grip portions 970 widens.

The bearing 965 and the grip body 974 are connected to the hinge shaft 960 and rotate about the hinge shaft, operating on the lever principle. The grip body 974 is implemented as two pieces, and a portion of the position where the hinge shaft is to be disposed is etched in the shape of the hinge shaft 960 so that the hinge shaft 960 can be disposed therein. Since two grip bodies 974 must be disposed with the hinge shaft in the middle, one of the grip bodies 974 is etched in a semicircular shape. The bearing 965 is disposed at the etched portion. The grip body 974 performs rotational movement about the hinge shaft 960, and allows the grip portion 970 and the grip protrusion 978 to operate on the lever principle.

Here, the bearing 965 may be implemented as two parts having a step with different diameters at one end and another end, like a flange bearing. The other ends (the ends with a relatively smaller diameter) of the two parts may be disposed to face each other, and accordingly, a space in which a portion of the grip body 974 can be disposed is formed in the bearing 965 (between the one ends of each part). The distance between the one ends of each part of the bearing 965 is implemented to be equal to the thickness of the portion of the grip body 974, so that the bearing 965 and the grip body 974 can mutually prevent each other's dislodgement.

The grip portion 970 is formed at one end of the grip body 974 with a preset area, and grips a battery cell by moving farther from or closer to each other according to the operation of the cylinder 950.

The grip portion 970 is formed at one end of the grip body 974 with a preset area. As described above, the grip body 974 is implemented as two pieces, and the grip portion 970 is formed on each grip body 974. The grip portion 970 is provided with a preset area, so that when a battery cell is positioned between the spacing of the grip portions 970, the battery cell can be gripped by the area. Accordingly, damage to the grip portion 970 or the battery cell that may occur from gripping at a single point is prevented.

The grip protrusion 978 is formed in a protruding shape at the other end of the grip body 974. The grip protrusion 978 protrudes in a cylindrical shape, thereby allowing the end 955 of the cylinder to smoothly enter between the grip protrusions 978. When the end 955 of the cylinder enters between the grip protrusions 978, the two grip protrusions 978 spread apart and the spacing of the grip portions 970 decreases.

The angle detection sensor 980 detects whether a battery cell is disposed between the grip portions 970. The angle detection sensor 980 is disposed on each battery cell gripper 460, and is disposed facing each other so that one emits light toward the other. However, the angle detection sensors 980 are not disposed on the same line but are disposed diagonally, such as in a '/' direction, to emit and receive light. When the angle detection sensors 980 emit light on the same line, there may be cases where a battery cell cannot be detected depending on circumstances. To address this, a pair of angle detection sensors 980 are disposed diagonally to detect a battery cell.

The angle adjustment shaft 985 adjusts the light emission direction and light reception direction of the angle detection sensor 980. The angle adjustment shaft 985 is disposed adjacent to the angle detection sensor 980, and changes the light emission direction and light reception direction of the angle detection sensor 980 according to its own rotation. In order to grip battery cells within the tray, each battery cell gripper 460 moves to have a considerably narrow spacing. Accordingly, light emitted from the angle detection sensor 980 within one battery cell gripper 460 may travel to the angle detection sensor 980 within an adjacent other battery cell gripper 460. The angle adjustment shaft 985 adjusts the light emission direction and light reception direction of the angle detection sensor 980 within each battery cell gripper 460 to prevent the occurrence of the aforementioned problem.

The sensor fixing hole 987 allows the angle detection sensor 980 whose angle has been adjusted by the angle adjustment shaft 985 to be fixed. The sensor fixing hole 987 receives a fixing means (not shown, for example, a fixing rod or the like) into its interior, and prevents the angle adjustment shaft 985 from further tilting the angle detection sensor 980 (adjustment of the light emission direction and light reception direction).

The first stopper 990 is disposed on the lower surface of the stopper support portion 918 facing the third link frame 930, and prevents damage due to a collision between the cylinder 950 and the stopper support portion 918. The cylinder 950 may rise up to the stopper support portion 918 by receiving power from the actuator 940. At this time, if no separate component exists, the cylinder 950 and the stopper support portion 918 may collide, and a problem may occur in which one or both are damaged. To prevent this, the first stopper 990 is disposed on the aforementioned surface of the stopper support portion 918 to prevent damage to both 918 and 950.

The second stopper 995 is disposed between the stopper support portion 918 and the second link frame 920 on the upper surface of the stopper support portion 918 (the opposite surface from the surface on which the first stopper is disposed). The second stopper 995 prevents a collision between the second link frame 920 and the stopper support portion 918, and reduces a lateral moment occurring in the guide portion 916 due to the movement of the battery cell gripper 460.

The second stopper 995 is disposed at the aforementioned position, and, like the first stopper 990, prevents damage to both the second link frame 920 and the support portion 918 due to a collision therebetween.

The second stopper 995 reduces the lateral moment occurring in the guide portion 916. The guide portion 916 has a characteristic of being vulnerable to the lateral moment that inevitably occurs. In particular, since the weight of all components of the battery cell gripper 460 is applied to the guide portion 916, the guide portion 916 becomes vulnerable to lateral moments (moments in the first axis direction and the third axis direction). To prevent this, the stopper support portion 918 and the second stopper 995 have the structure shown in FIG. 9D.

The second stopper 995 includes a groove 997 recessed toward its center on the surface facing the stopper support portion 918. Meanwhile, the stopper support portion 918 includes a protrusion 999 protruding toward the second stopper 995 in a shape corresponding to the groove 997 on the surface facing the second stopper 995. As such, when the second stopper 995 is disposed on the stopper support portion 918, the groove 997 and the protrusion 999 are additionally coupled. Accordingly, the guide portion 916 becomes more robust against moments acting in the first axis (x-axis direction in FIG. 9D) and the third axis (y-axis direction in FIG. 9D) by the coupling of both 997 and 999, and the (unnecessary and unintended) movement of the second link frame 920 in the corresponding axis directions can be minimized.

At this time, the protrusion 999 may be implemented as a headless bolt, and a thread may be implemented within the stopper support portion 918. The protrusion 999 is coupled with the stopper support portion 918 by a screw coupling, and the degree of protrusion can be adjusted. Accordingly, the coupling strength (fastening force) between the protrusion 999 and the stopper support portion 918 can be excellent, and the degree of protrusion of the protrusion 999 can also be adjusted as needed.

Meanwhile, although FIG. 9D illustrates the groove 997 implemented in the second stopper 995 and the protrusion 999 implemented in the stopper support portion 918, this is not necessarily limited thereto. The groove 997 may be implemented in the stopper support portion 918 and the protrusion 999 may be implemented in the second stopper 995, and the aforementioned features may be provided.

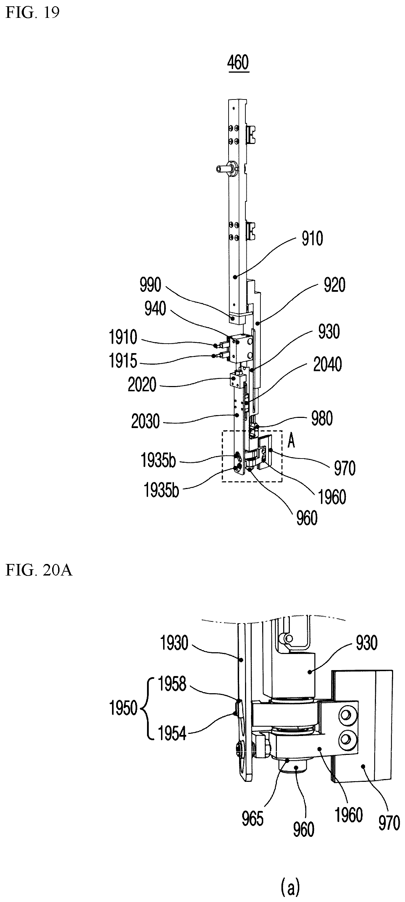

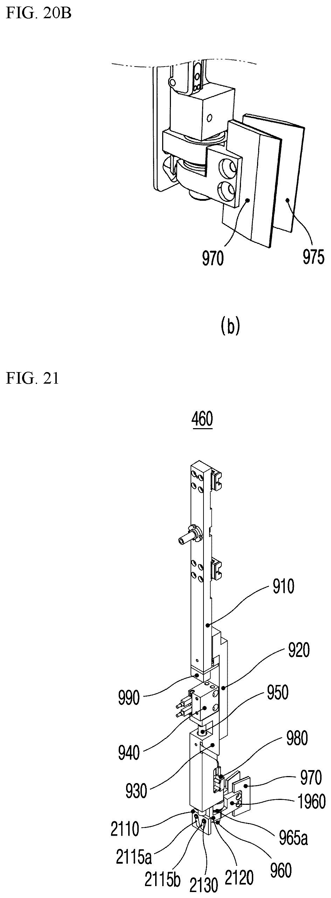

FIG. 19 is a view illustrating a configuration of a battery cell gripper according to another embodiment of the present invention, and FIG. 20 is an enlarged view of a portion of a battery cell gripper according to another embodiment of the present invention.

Referring to FIGS. 19 and 20, the battery cell gripper 460 according to another embodiment of the present invention includes first through third link frames 910 through 930, a slide rail (not shown), a link member fixing pin (not shown), a guide portion (not shown), a stopper support portion (not shown), an actuator 940, plate detection sensors 1910 and 1915, a plate fixing portion 1920, a plate 1930, a guide groove 1935, an LM guide 1940, a hinge shaft 960, a bearing 965, a grip portion 970, a grip protrusion 1950, a grip body 1960, an angle detection sensor 980, an angle adjustment shaft 985, a first stopper 990, and a second stopper 995. Here, since the first through third link frames 910 through 930, the slide rail (not shown), the link member fixing pin (not shown), the guide portion (not shown), the stopper support portion (not shown), the actuator 940, the hinge shaft 960, the bearing 965, the grip portion 970, the angle detection sensor 980, the angle adjustment shaft 985, the first stopper 990, and the second stopper 995 perform the same operations as the identical components within the battery cell gripper 460 according to the embodiment of the present invention, a detailed description thereof will be omitted.

The plate detection sensors 1910 and 1915 detect the operation of the actuator 940, thereby detecting the movement of the plate 1930. The plate 1930 rises or descends according to the operation of the actuator 940. The plate detection sensors 1910 and 1915 detect the actuator 940 that raises or lowers the plate 1930, thereby detecting whether the plate 1930 has risen or descended. Due to the physical coupling between the grip protrusion 1950 and the guide groove 1935 within the plate 1930, the grip portion 970 physically moves together with the movement of the plate 1930. That is, detecting the movement state of the plate 1930 is equivalent to detecting the movement state of the grip portion 970. When a foreign substance is positioned between the grip portions 970 and the spacing between the grip portions 970 cannot be narrowed, a constraint also occurs in the movement of the plate 1930. The plate detection sensors 1910 and 1915 detect the movement of the plate 1930 in this manner, and determine whether the spacing between the grip portions 970 cannot be narrowed or widened due to a foreign substance or the like.

The plate fixing portion 1920 transmits the power transmitted from the actuator 940 to the plate 1930. The plate fixing portion 1920 is coupled at one end with the actuator 940 and at another end with the plate 1930, and transmits the power transmitted from the actuator 940 to the plate 1930. Accordingly, the plate fixing portion 1920 and the plate 1930 rise or descend according to the power supply from the actuator 940.

The plate 1930 is raised and lowered by the actuator 940, and adjusts the spacing between the grip portions 970.

The plate 1930 includes at least two or more guide grooves 1935 at an end opposite to the end where the plate fixing portion 1920 is positioned. Each guide groove 1935 is formed at respective positions at the end of the plate 1930 in a direction perpendicular to the movement direction of the plate 1930, and is formed in a diagonal shape in which one ends thereof approach each other. The grip protrusion 1950 is disposed within the guide groove 1935. When the plate 1930 is raised or lowered, the grip protrusion 1950 moves along the guide groove 1935, and the grip body 974 and the grip portion 970 rotate by the hinge shaft 960. Accordingly, the spacing between the grip portions 970 becomes closer or farther. As such, the plate 1930 includes the guide groove 1935 and the grip protrusion 1950 is disposed within the guide groove 1935, thereby rotating the grip portion 970 and the like.

The LM guide 1940 is disposed between the third link frame 930 and the plate 1930, and assists the raising and lowering of the plate 1930. The LM guide 1940 assists the raising and lowering of the plate 1930 at the aforementioned position, and prevents the plate 1930 from deviating from its movement axis.

The grip protrusion 1950 is formed in a protruding shape at the other end of the grip body 974 (the end far from the grip portion) or is connected to the other end of the grip body 974 in a protruding form (with the grip body) and moves along the guide groove 1935. The grip protrusion 1950 includes a fixed shaft 2054 and a rotating roller 2058 disposed on the outside thereof. The rotating roller 2058 contacts one surface of the guide groove 1935 and moves along the guide groove 1935 according to the raising and lowering of the plate 1930. As described above, since the guide groove 1935 is formed in a diagonal direction with one ends thereof approaching each other, even when the plate 1930 is raised or lowered, the spacing between the grip protrusions 1950 is maintained constant, but the relative positions of the respective grip protrusions 1950 before and after the raising and lowering of the plate 1930 change. Accordingly, as the grip protrusion 1950 moves along the guide groove 1935, the grip body 974 and the grip portion 970 rotate by the hinge shaft 960.

The grip body 1960 includes a grip portion 970 formed with a preset area at one end or connected thereto, and a grip protrusion 1950 formed in a protruding shape at the other end or connected thereto. The grip body 1960, excluding the grip portion 970 and the grip protrusion 1950, has a thickness equal to the spacing of the space formed within the bearing 965, as described above. Accordingly, the grip bodies 1960 have a form of being stacked one above the other. Accordingly, the grip protrusions 1950 also have a spacing from each other in the vertical direction.

Meanwhile, the grip portion 970 may include a silicone coating surface 975 on the surfaces facing each other. The silicone coating surface 975 is formed by coating a silicone material on the mutually facing surfaces of the grip portions 970, and can improve the gripping force of the grip portion 970 on the battery cell by enhancing friction. In the prior art, silicone was implemented in a form of being adhered to the aforementioned surface of the grip portion, but when a certain period of time elapsed, there was a problem that the silicone detached from the grip portion and fell onto the battery or the like. To prevent this, the grip portion 970 may include the silicone coating surface 975.

FIG. 21 is a view illustrating a configuration of a battery cell gripper according to yet another embodiment of the present invention.

Referring to FIG. 21, the battery cell gripper 460 according to yet another embodiment of the present invention includes first through third link frames 910 through 930, a slide rail (not shown), a link member fixing pin (not shown), a guide portion (not shown), a stopper support portion (not shown), an actuator 940, a cylinder 950, a grip protrusion guiding plate 2110, a guide groove 2115, a hinge shaft 960, a bearing 965, a grip portion 970, a grip protrusion 2130, a grip body 1960, a grip protrusion fixing portion 2120, an angle detection sensor 980, an angle adjustment shaft 985, a first stopper 990, and a second stopper 995. Here, since the first through third link frames 910 through 930, the slide rail (not shown), the link member fixing pin (not shown), the guide portion (not shown), the stopper support portion (not shown), the actuator 940, the hinge shaft 960, the bearing 965, the grip portion 970, the grip body 1960, the angle detection sensor 980, the angle adjustment shaft 985, the first stopper 990, and the second stopper 995 perform the same operations as the identical components within the battery cell gripper 460 according to the embodiment or another embodiment of the present invention, a detailed description thereof will be omitted.

The grip protrusion guiding plate 2110 is connected to the end of the cylinder 950 (close to the grip protrusion), and rotates the grip portion 970 according to the operation of the cylinder 950.

The grip protrusion guiding plate 2110 is connected to the aforementioned end of the cylinder 950, and is raised and lowered together with the raising and lowering of the cylinder 950.

At this time, the grip protrusion guiding plate 2110 includes at least two or more guide grooves 2115. Each guide groove 2115 is formed in the same direction as the movement direction of the grip protrusion guiding plate 2110, and is formed in a diagonal shape in which one ends thereof approach each other. The grip protrusion 2130 is disposed within the guide groove 2115, and the grip portion 970 and the like rotate as described above.

Meanwhile, a grip protrusion fixing portion 2120 is formed at the other end of the grip body 1960, and the grip protrusion 2130 is formed in a protruding shape on the grip protrusion fixing portion 2120 or is connected thereto. The grip protrusion fixing portion 2120 formed on the grip body 1960 disposed at the lower position has a protruding shape directed toward the upper portion, and the grip protrusion fixing portion 2120 formed on the grip body 1960 disposed at the upper position has a protruding shape directed toward the lower portion. Accordingly, the grip protrusion fixing portions 2120 enable the surfaces contacting the grip protrusion guiding plate 2110 to have the same area as each other.

As the grip protrusion fixing portion 2120 is formed, the grip protrusions 2130 can be positioned at the same height as each other in the direction in which the grip protrusion guiding plate 2110 moves. The grip protrusions 2130 are formed at the same height as each other, and move closer to or farther from each other along the guide groove 2115, thereby rotating the grip portion 970.

FIG. 10 is a perspective view of a transfer tray according to an embodiment of the present invention.

Referring to FIG. 10, the transfer tray 130 according to an embodiment of the present invention includes a frame 1010, a protrusion 1020, a reinforcing frame 1025, a guide portion 1030, a support sheet support portion 1040, a support sheet 1050, and a restoring member 1070.

The frame 1010 provides a space in which the remaining components within the transfer tray 130 are implemented, and allows itself to be seated on a component of the battery cell activation device 150. The frame 1010 has a rectangular shape elongated in one axis, so that the support sheet support portions 1040 and the battery cells 1060 to be arranged on the support sheet 1050 can be arranged side by side in the corresponding axis direction along its long axis.

The protrusion 1020 is implemented on the long axis direction of the frame 1010. The protrusion 1020 may have a structure protruding from the frame 1010 in a '⊏'-shaped (C-shaped) form along the long axis direction of the frame 1010. As the protrusion 1020 is implemented, the stacker crane 140, which will be described later, can grip the protrusion 1020 to transfer the transfer tray 130.

The reinforcing frame 1025 is connected at one end to the frame 1010 and at another end to the protrusion 1020, and structurally reinforces the protrusion 1020. As described above, the protrusion 1020 is a portion gripped by the stacker crane 140, and corresponds to a portion on which an external force acts. Accordingly, as the reinforcing frame 1025 is implemented in the aforementioned form, it structurally reinforces the protrusion 1020 so that the protrusion 1020 can become more robust against the external force.

The guide portion 1030 is implemented in a form connected to both ends within the frame 1010 in the long axis direction, and allows the support sheet support portion 1040 to move therealong.

The support sheet support portion 1040 is included in a number that is one more than the number of battery cells 1060 to be activated at one time, and supports the support sheet 1050. Since the support sheet support portions 1040, included in a number that is one more than the total number of battery cells 1060 contained in the cell tray and to be activated, support the support sheet 1050, the respective battery cells 1060 can be seated on the support sheet 1050 supported by the support sheet support portions 1040.

The support sheet support portion 1040 has the structure shown in FIG. 11, and accordingly can move along the guide portion 1030 while supporting the support sheet, and can move farther from or closer to each other.

FIG. 11 is a perspective view of a support sheet support portion according to an embodiment of the present invention.

Referring to FIG. 11, the support sheet support portion 1040 according to an embodiment of the present invention includes a support sheet support bar 1110, a support sheet link portion 1115, a support sheet fixing portion 1120, a link frame 1130, a link groove 1135, and a guide hole 1140.

The support sheet support bar 1110 includes upper and lower surfaces implemented as flat surfaces, and supports the support sheet on its upper surface. In order to completely support the support sheet 1050, the upper surface of the support sheet support bar 1110 is implemented as a flat surface. Meanwhile, the lower surface of the support sheet support bar 1110 is likewise implemented as a flat surface so as to be completely seated on the battery cell activation device 150, more specifically, the jig plate 1530 to be described later.

A support sheet link portion 1115 is implemented at both ends (in the length direction) of the support sheet support bar 1110. The support sheet link portion 1115 is structurally coupled with the link groove 1135 within the link frame 1130 at both ends of the support sheet support bar 1110, so that the support sheet support bar 1110 can be coupled with the link frame 1130. For example, the support sheet link portion 1115 has a structure protruding from the support sheet support bar 1110 in the height direction (the axis direction connecting the upper surface and the lower surface of the support sheet support bar), and accordingly is coupled to the link groove 1135 having an entrance implemented with a narrower width than the support sheet link portion 1115. Accordingly, the support sheet link portion 1115 prevents at least the support sheet support bar 1110 from being dislodged from the link frame 1130 in the length direction.

The support sheet fixing portion 1120 is coupled with the support sheet support bar 1110, and fixes the support sheet 1050. In a state where the support sheet support bar 1110 and the support sheet fixing portion 1120 are separated, the support sheet 1050 is disposed on the support sheet support bar 1110. Thereafter, the support sheet fixing portion 1120 is coupled onto the support sheet support bar 1110, and fixes the support sheet 1050.

The link frame 1130 is coupled at both ends in the length direction of the support sheet support bar 1110, and connects the support sheet support bar 1110 and the guide hole 1140. The link frame 1130 includes the link groove 1135 therein and is coupled with the support sheet support bar 1110, and is coupled with the guide hole 1140 on its upper surface. Accordingly, the support sheet support portion 1040 can be coupled to and fixed on the guide portion 1030 by the guide hole 1140, and the support sheet support portion 1040 can move along the guide portion 1030.

As described above, the link frame 1130 includes the link groove 1135, and is coupled with the support sheet support bar 1110. The link groove 1135 includes an entrance implemented with a relatively narrow width and an interior implemented with a wider width than the entrance, and allows the support sheet link portion 1115 to enter into its interior and be coupled therewith. Accordingly, both components 1115 and 1135 are coupled, and the support sheet support bar 1110 and the link frame 1130 are completely coupled in the length direction.

The guide hole 1140 is coupled with the link frame 1130 at the upper end of each link frame 1130, and includes a through-hole so that the guide portion 1030 can penetrate through its interior. As the guide portion 1030 penetrates through the guide hole 1140, the support sheet support portions 1040 can move closer to or farther from each other along the guide portion 1030.

Referring again to FIG. 10, the support sheet 1050 is supported according to the support sheet support portion 1040, and allows battery cells 1060 to be arranged thereon.

The restoring member 1070 is disposed between each support sheet support portion 1040, more specifically, between the guide holes 1140 of the respective support sheet support portions 1040, and prevents distortion of both support sheet support portions 1040 connected thereto and maintains levelness. For example, the restoring member 1070 may be implemented of a material having elasticity, such as a spring. Accordingly, when the respective support sheet support portions 1040 move closer to or farther from each other, the restoring member 1070 enables the respective support sheet support portions 1040 to move without distortion and while maintaining levelness. As will be described later, the support sheet support portions 1040 move closer to or farther from each other by the battery cell activation device 150, and the restoring member 1070 enables the support sheet support portions 1040 to move uniformly without distortion.

Additionally, the restoring member 1070 can apply a restoring force to assist restoration when the support sheet support portions 1040 return to a position proximate to each other or to their initial form by the battery cell activation device 150. As described above, the restoring member 1070 may be implemented of a material having elasticity. The restoring member 1070 applies a restoring force to the support sheet support portions 1040 to assist restoration, thereby enabling the support sheet support portions 1040 to return to a position proximate to each other or to their initial form more quickly and smoothly by the battery cell activation device 150. For example, the support sheet support portion 1040 disposed at the most central position may have a state of being fixed within the frame 1010. In this case, the support sheet support portions 1040 can move so as to be farther from each other, and when the movement is completed, are disposed proximate to each other with respect to the center of the transfer tray 130 (as illustrated in FIG. 10) by the restoring member 1070. Since the support sheet support portions 1040 are disposed proximate to each other with respect to the center of the transfer tray 130 in a situation where they have not moved, the frame 1010 at both ends in the long axis direction and the support sheet support portions 1040 can be spaced apart from each other. Accordingly, when the transfer tray 130 is seated onto the battery cell activation device 150 by the stacker crane 140, collision of the battery cells 1060 with other components within the battery cell activation device 150 can be prevented.

FIG. 12A is a perspective view of a stacker crane according to a first embodiment of the present invention.

Referring to FIG. 12A, the stacker crane 140 according to an embodiment of the present invention includes a gripping frame 1210, a gripping portion 1215, a guide portion 1220, a motor (not shown), a support frame 1230, a connection portion 1235, a link frame 1240, a roller 1243, a guide portion 1246, a frame contact surface 1249, a crane 1250, a guide rail 1260, a guide body 1270, and a motor 1280.

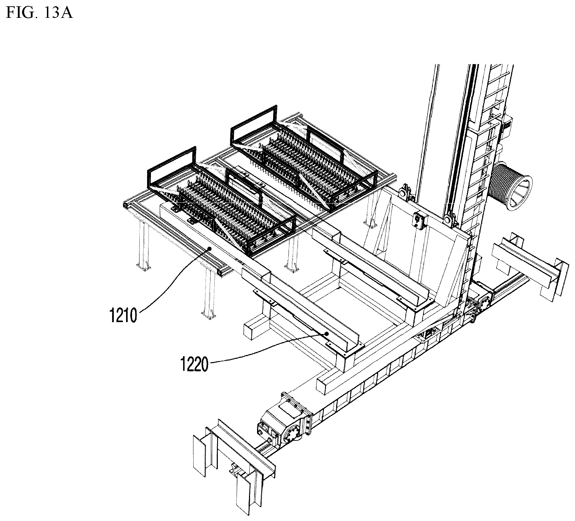

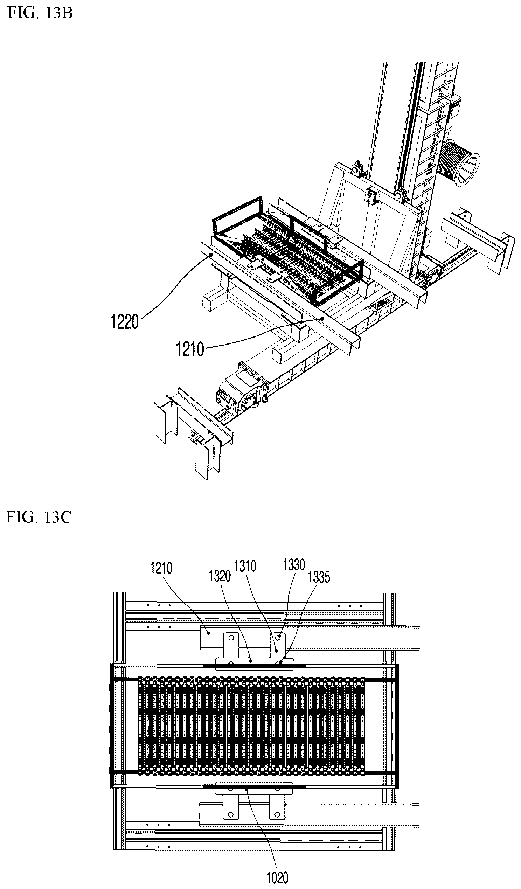

The gripping frame 1210 moves along the guide portion 1220 in the third axis direction or the long axis direction of the transfer tray 130, and grips the protrusion 1020 of the transfer tray 130 using the gripping portion 1215. The gripping frame 1210 moves along the third axis or the long axis direction of the transfer tray 130, and moves so as to become closer to or farther from the transfer tray 130 in the corresponding axis direction. The operation of the gripping frame 1210 and the structure of the gripping portion 1215 are shown in FIG. 13.

FIGS. 13A and 13B are views illustrating operation examples of a gripping frame according to a first embodiment of the present invention, and FIG. 13C is a view illustrating a state in which a gripping frame grips a transfer tray according to a first embodiment of the present invention.

Referring to FIGS. 13A and 13B, as described above, the gripping frame 1210 moves along the guide portion 1220 in the long axis direction of the transfer tray 130, and moves so as to become closer to or farther from the transfer tray 130 in the corresponding axis direction.

Referring to FIG. 13C, the gripping frame 1210 includes the gripping portion 1215, and the gripping portion 1215 includes a plurality of connecting plates 1310, a gripping plate 1320, a first hinge 1330, and a second hinge 1335.

The connecting plate 1310 is connected at one surface to the gripping frame 1210 and at another surface to the gripping plate 1320, thereby connecting both 1210 and 1320.

The gripping plate 1320 is connected at one surface to the connecting plate 1310, and contacts the protrusion 1020 of the transfer tray 130 at another surface, thereby gripping the transfer tray 130. The gripping plate 1320 may be implemented as a flat surface, but may include a groove (not shown) having the same shape as the protrusion 1020 in a portion thereof (more preferably, the central portion). Accordingly, when the gripping plate 1320 contacts the protrusion 1020, the protrusion 1020 is seated within the groove (not shown), thereby enabling more complete fixation and gripping.

The first hinge 1330 connects the gripping frame 1210 and each connecting plate 1310 in a hinge structure, so that the connecting plate 1310 performs rotational movement. Each connecting plate 1310 is connected to the gripping frame 1210 by the first hinge 1330, and moves in a direction parallel to the gripping frame 1210 or in a direction perpendicular thereto (a direction facing the protrusion).

The second hinge 1335 connects each connecting plate 1310 and the gripping plate 1320 in a hinge structure, so that the gripping plate 1320 performs rotational movement. The second hinge 1335 rotates the gripping plate 1320 so that the gripping plate 1320 continuously faces a direction parallel to the protrusion 1020, even when each connecting plate 1310 moves (rotates) in the aforementioned direction by the first hinge 1330.

As the gripping portion 1215 has the aforementioned structure and operates, the gripping frame 1210 can grip the protrusion 1020 of the transfer tray 130.

Referring again to FIG. 12, the guide portion 1220 allows the gripping frame 1210 to move therealong. The guide portion 1220 is disposed facing the third axis or the long axis direction of the transfer tray 130, and allows the gripping frame 1210 disposed thereon to move in the same axis direction therealong. The gripping frame 1210 may be connected to and disposed on the guide portion 1220 by a structure such as a rail (not shown).

The motor (not shown) supplies power enabling the gripping frame 1210 to move along the guide portion 1220. Accordingly, the gripping frame 1210 can move in the third axis direction or the long axis direction of the transfer tray 130.

The support frame 1230 is implemented in an 'L'-shaped configuration, and supports the guide portion 1220 or the guide portion 1220 and the motor (not shown) on its lower surface, and is connected to the link frame 1240 on its side surface. The side surface of the support frame 1230 is coupled with the link frame 1240, particularly the guide portion 1246 formed within the link frame 1240, by a roller (not shown) or the like, and is raised and lowered along the guide portion 1246 within the link frame 1240. Meanwhile, the support frame 1230 supports the guide portion 1220 or the guide portion 1220 and the motor (not shown) on its lower surface, and raises and lowers the components it supports together with itself. Thereby, the gripping frame 1210 can move in the second axis direction.

The connection portion 1235 is implemented at a position within the support frame 1230, more preferably at an upper portion of the side surface, and is coupled with a rope (not shown) within the crane 1250. The connection portion 1235 is coupled with the rope (not shown) within the crane 1250, and enables the support frame 1230 to receive power from the crane 1250 to be raised and lowered.

The link frame 1240 is connected with the support frame 1230 and the guide body 1270, and allows the support frame 1230 to move therealong, while simultaneously enabling the support frame 1230 to move together by the movement of the guide body 1270. The link frame 1240 is connected with the support frame 1230 as described above, and is connected to the guide body 1270 by the frame contact surface 1249. Accordingly, the link frame 1240 enables the support frame 1230 to be raised and lowered (the gripping frame moves in the second axis direction) by the crane 1250, and simultaneously enables the support frame 1230 to move in the first axis direction by the movement of the guide body 1270.

The roller 1243 is implemented at one end of the link frame 1240 (the end farthest from the frame contact surface). The roller 1243 enables a rope (not shown) within the crane 1250 to be connected from the crane 1250 to the connection portion 1235, and simultaneously enables power to be smoothly transmitted from the crane 1250 to the connection portion 1235 by the rope (not shown).

The guide portion 1246 is implemented on one side of the link frame 1240 and is coupled with the support frame 1230, and enables the support frame 1230 to move along the link frame 1240.

The crane 1250 includes a rope (not shown), and winds the rope (not shown) to apply an attractive force or a repulsive force to the components connected thereto. The crane 1250 is disposed on one side of the link frame 1240, and includes the rope (not shown) to wind the rope (not shown). At this time, as described above, since the rope (not shown) is coupled to the connection portion 1235 within the support frame 1230, when the crane 1250 winds the rope (not shown), the support frame 1230 can be raised or lowered along the rope (not shown).

The guide rail 1260 is disposed in the first axis direction, and allows the guide body 1270 disposed thereon to move along the first axis therealong.

The guide body 1270 is coupled at one surface with the guide rail 1260, and is connected at another surface to the frame contact surface 1249 of the link frame 1240. The guide body 1270 enables itself and the link frame 1240 connected thereto to move along the first axis along the guide rail 1260. Accordingly, the gripping frame 1210 can move in the first axis direction.

The motor 1280 provides power enabling the guide body 1270 to move along the guide rail 1260.

As the stacker crane 140 has the aforementioned structure, it can grip the transfer tray 130 as a whole, and can transfer the gripped transfer tray 130 in any direction in three-dimensional space. Accordingly, since the battery cells for activation are not transferred individually to the battery cell activation device 150 but are transferred as the entire transfer tray 130, the problems that occur when battery cells are individually transferred as in the prior art can be fundamentally resolved. In addition, even when the battery cell activation devices 150 are stacked and arranged in an m×n configuration, the stacker crane 140 can transfer and seat the transfer tray 130 without difficulty to any battery cell activation device 150.

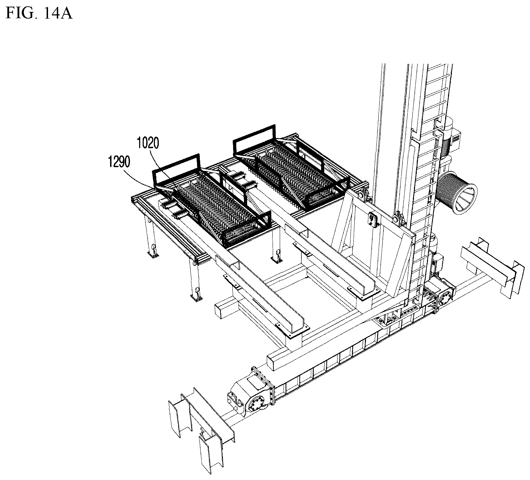

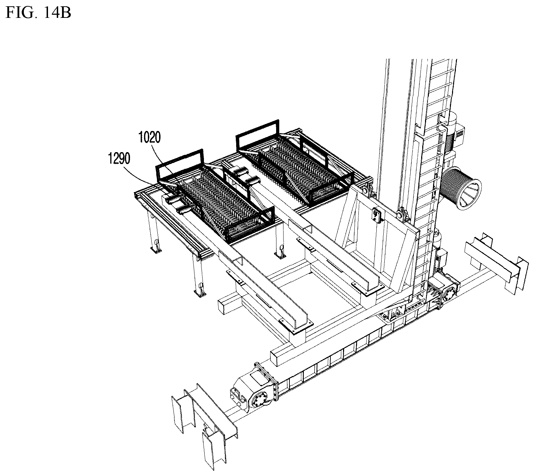

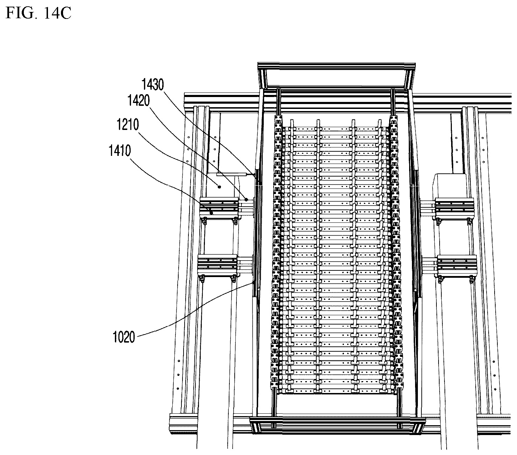

Meanwhile, the stacker crane 140 may have a structure as shown in FIGS. 12B and 14.

FIG. 12B is a perspective view of a stacker crane according to a second embodiment of the present invention.

Referring to FIG. 12B, the stacker crane 140 according to the second embodiment of the present invention has the same components as the stacker crane 140 according to the first embodiment of the present invention, but includes a gripping portion 1290 instead of the gripping portion 1215, and additionally further includes a sensor portion 1295.

The stacker crane 140 also grips the protrusion 1020 of the transfer tray 130 using the gripping portion 1290. However, unlike the gripping portion 1215, the gripping portion 1290 operates in a form in which a gripping groove reciprocates along a guide rather than a hinge structure, and grips the protrusion 1020 of the tray 130. The structure and operation of the gripping portion 1290 will be described later with reference to FIG. 14.

The sensor portion 1295 is disposed within a preset radius from the gripping portion 1290, and senses the distance between the gripping portion 1290 and the protrusion 1020 of the tray 130. The sensor portion 1295 senses the distance between the two, and enables confirmation of whether the gripping portion 1290 has reached a position where it can grip the protrusion 1020. As will be described later, the length by which the gripping groove 1430 is extended by the gripping groove moving portion 1420 within the gripping portion 1290 is in a determined state. Therefore, the sensor portion 1295 enables confirmation of whether the distance between the two matches the corresponding length (the length by which the gripping groove can be extended). In this case, the gripping groove 1420 can extend toward the protrusion 1020 and grip the protrusion 1020.

FIGS. 14A and 14B are views illustrating operation examples of a gripping frame and a gripping portion according to a second embodiment of the present invention, and FIG. 14C is a view illustrating a state in which a gripping portion grips a transfer tray according to a second embodiment of the present invention.

Referring to FIGS. 14A through 14C, the gripping portion 1290 according to the second embodiment includes a gripping groove guide 1410, a gripping groove moving portion 1420, and a gripping groove 1430.

The gripping groove guide 1410 is implemented on the gripping frame 1210, and enables the gripping groove moving portion 1420 to move closer to or farther from the transfer tray 130 with respect to the short axis direction of the transfer tray 130. The gripping groove guide 1410 includes a guide hole therein that allows the gripping groove moving portion 1420 to flow in and out, and enables the gripping groove moving portion 1420 to move as described above.

The gripping groove moving portion 1420 flows within the guide hole of the gripping groove guide 1410, and simultaneously is coupled at one end with the gripping groove 1430 to move the gripping groove 1430 in the aforementioned direction. Accordingly, the gripping groove 1430 can move along the gripping groove guide 1410 by the gripping groove moving portion 1420 so as to approach the protrusion 1020 of the transfer tray 130, or move so as to be farther therefrom.

The gripping groove 1430 is coupled with the tray 130, more specifically, the protrusion 1020, and grips the transfer tray 130. The gripping groove 1430 includes a groove in which the protrusion 1020 can be seated. The width of the groove (length in the short axis direction of the transfer tray) is implemented to be at least equal to the width of the protrusion 1020 or greater than the width of the protrusion 1020. Likewise, the depth of the groove (length in the direction perpendicular to both the short axis direction and the long axis direction of the transfer tray) is also implemented to be at least equal to the depth of the protrusion 1020 or greater than the depth of the protrusion 1020. Accordingly, the gripping groove 1430 can safely seat the protrusion 1020 within its groove.

Meanwhile, as described above, according to the sensing of the sensor 1295, the gripping groove 1430 and the protrusion 1020 are adjusted to be spaced apart by the extendable length of the gripping groove moving portion 1420. Accordingly, when the gripping groove 1430 is extended (moved closer) toward the protrusion 1020 by the gripping groove moving portion 1420, the gripping groove 1430 seats the protrusion 1020 within its groove and grips it.

FIG. 15 is a perspective view of a battery cell activation device according to an embodiment of the present invention, and FIG. 16 is a view illustrating a state in which a transfer tray is seated on a battery cell activation device according to an embodiment of the present invention.

Referring to FIG. 15, the battery cell activation device 150 according to an embodiment of the present invention includes a pressing member 1510, a jig press plate 1520, a pressing plate 1525, a jig plate 1530, a battery cell fixing module 1540, a first rail 1550, a second rail 1555, a frame 1560, a first fixing plate 1564, a second fixing plate 1568, a pressure sensor 1570, a support plate 1580, an elastic member 1585, and a guide cylinder 1590.

The battery cell activation device 150 activates the battery cells 1060 within the transfer tray 130 that is transferred by the stacker crane 140 and seated thereon. As shown in FIG. 16, the frame 1010 of the transfer tray 130 is mounted on the pressing member 1510 and the jig press plate 1520, and the support sheets 1050 within the transfer tray 130 and the battery cells 1060 arranged between the support sheets are disposed between the jig plates 1530. That is, the transfer tray 130 is seated onto the battery cell activation device 150, and the battery cells 1060 are disposed between the jig plates 1530, thereby forming an environment in which they can be activated. In particular, since the restoring member 1070 included in the transfer tray 130 spaces apart the frame 1010 at both ends and the support sheet support portions 1040 from each other, the transfer tray 130 can be seated onto the battery cell activation device 150 without damage to the battery cells 1060, and the activation can proceed smoothly. Accordingly, the battery cell activation device 150 can activate the electrical characteristics of the battery cells in a convenient and rapid manner.

The pressing member 1510 receives power from the outside and presses the jig press plate 1520. The pressing member 1510 may be implemented, for example, as a component such as a jack screw that receives rotational force and converts it into linear reciprocating motion, or may be implemented as a component that receives power and performs linear reciprocating motion.

The jig press plate 1520 receives pressure from the pressing member 1510 and applies pressure to each jig plate 1530 and to the battery cells disposed between the jig plates. The jig press plate 1520 may include a pressing portion (not shown) and a wing portion (not shown).

The jig press plate 1520 is implemented in a rectangular shape in which the length in the length direction is relatively longer than the length in the height direction.

The pressing portion (not shown) is physically connected to the pressing member 1510, and receives pressure from the pressing member 1510 to press other members.

The wing portion (not shown) is a portion extended from the pressing portion (not shown) in each length direction, and distributes the pressure transmitted by the pressing member 1510. By the existence of the wing portion (not shown) which distributes the pressure, the jig press plate 1520 can apply uniform pressure to the battery cells disposed between the jig press plate 1520 and the jig plate.

The pressing plate 1525 is disposed on the opposite side of the jig press plate 1520, and receives the pressure transmitted through the jig press plate 1520 and the jig plate 1530.

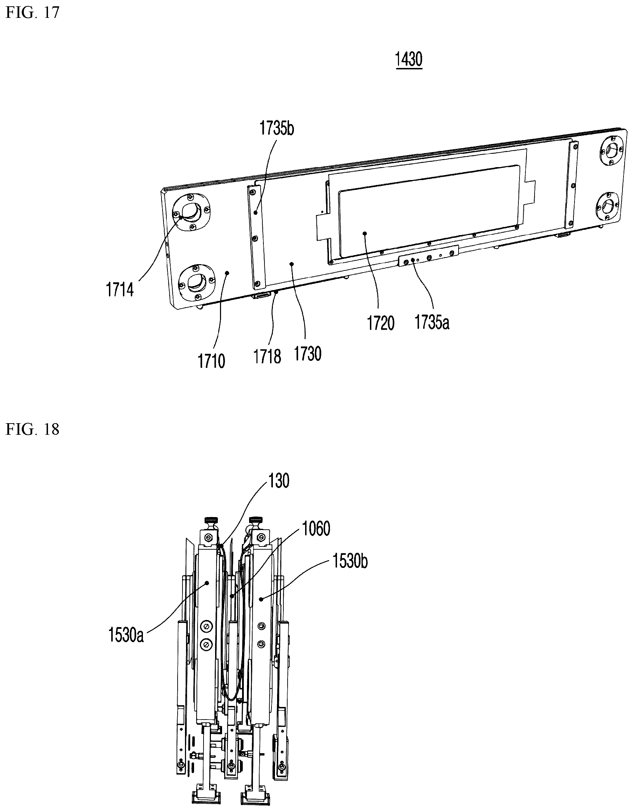

The jig plate 1530 is included in a number that is one more than the number of battery cells to be activated at one time, and arranges battery cells between themselves for pressing. The jig plate 1530 and the battery cells disposed between the jig plates 1530 are shown in FIGS. 17 and 18.

FIG. 17 is a perspective view of a jig plate according to an embodiment of the present invention, and FIG. 18 is a side view of a jig plate on which a transfer tray is seated according to an embodiment of the present invention.

Referring to FIGS. 17 and 18, the jig plate 1530 according to an embodiment of the present invention includes a jig frame 1710, a guide hole 1714, a rail 1718, a pad 1720, and a pad fixing plate 1730.

The jig frame 1710 provides a space in which other components within the jig plate 1530 are disposed or fixed. The jig frame 1710 has a predetermined area and width (length in the direction in which the pressing member applies pressure in FIG. 15), so that each component can be disposed and fixed.

Meanwhile, as shown in FIG. 18, when the transfer tray 130 is seated onto the battery cell activation device 150, the support sheet support portion 1040 can be seated on the jig frame 1710. With this seating, the support sheet 1050 and the battery cells 1060 supported by the support sheet 1050 can be disposed between the jig frames 1710.

The guide hole 1714 is formed as a through-hole within the jig frame 1710, and allows the guide cylinder 1590 to penetrate through the jig plate 1530. As the guide cylinder 1590 penetrates through the guide hole 1714, the jig plate 1530 moves along the axis formed by the guide cylinder 1590 (the third axis).

The rail 1718 is formed at the lowermost portion of the jig frame 1710 along the jig frame 1710, and moves the battery cell fixing module 1540 coupled to the rail 1718 in the direction of the rail 1718. The jig plate 1530 including the jig frame 1710 must press the battery cells seated thereon, and therefore is disposed facing the first axis and moves along the third axis to press the battery cells. The rail 1718 is formed at the aforementioned position facing the first axis. Accordingly, the battery cell fixing module 1540 coupled to the rail 1718 can move along the first axis along the rail 1718, and move toward the battery cell or in a direction away from the battery cell.

The pad 1720 is disposed on a surface facing an adjacent jig plate 1530 within the jig frame 1710, and prevents damage to the battery cells during the process of pressing the battery cells. The pad 1720 is implemented of a material having elasticity or a material having a hardness below a preset reference value (not rigid), and cushions the impact upon contact with the battery cells while preventing damage due to the contact.

The pad fixing plate 1730 fixes the pad 1720 to the aforementioned surface of the jig frame 1710. The pad fixing plate 1730 is fixed to the jig frame 1710 by a fixing portion 1335. Meanwhile, the pad fixing plate 1730 fixes the pad at a portion thereof (for example, the center). For example, the pad fixing plate 1730 fixes the pad by various methods such as including a structure at a portion thereof in which the pad can be disposed and coupled, or being engraved in the shape of the pad.

Referring again to FIGS. 15 and 16, the battery cell fixing module 1540 moves along the third axis and the first axis, and fixes the battery cells disposed between the jig plates 1530 while pressing the battery cells. Two battery cell fixing modules 1540 are included and disposed facing each other, and fix the battery cells, particularly the electrodes within the battery cells, from both sides.

The first rail 1550 is disposed on the frame 1560 along the third axis, and enables each battery cell fixing module to move closer to or farther from each other.

The second rail 1555 is disposed below the frame 1560 along the first axis, and moves each frame 1560 in a direction of approaching or moving away from each other (the first axis). The second rail 1555 is disposed below the frame 1560 along the first axis, and the frame 1560 includes a guide portion (not shown) at its lower portion and is connected to the second rail 1555. Accordingly, the frame 1560 moves along the first axis along the second rail 1555, and moves so as to approach or move away from each other between the respective frames 1560.

The frame 1560 supports each battery cell fixing module 1540 and the first rail 1550, and provides a space in which they are disposed. The frame 1560 can move closer to or farther from each other along the second rail 1555, and the battery cell fixing modules 1540 can also move farther from or closer to each other along the rail 1718.

The first fixing plate 1564 fixes the pressing member 1510, so that the pressing member 1510 is coupled with the jig press plate 1520 without dislodgement and can completely press the jig press plate 1520.

The second fixing plate 1568 fixes the pressure sensor 1570, and maintains a spacing between itself and the support plate 1580 in which the pressure sensor 1570 can be disposed.

The pressure sensor 1570 senses the pressure applied to the support plate 1580. The pressure sensor 1570 senses the pressure applied to the support plate 1580 between the second fixing plate 1568 and the support plate 1580, and senses the magnitude of pressure being applied to each battery cell. The jig press plate 1520 is pressed by the pressing member 1510 and presses each jig plate 1530, and the jig plates 1530 and the battery cells disposed therebetween transmit pressure to the adjacent jig plate 1530 by the pressing while simultaneously being compressed in the direction of the support plate 1580. Ultimately, the pressure for reducing the spacing between the jig plates 1530 is transmitted to the support plate 1580, and the pressure sensor 1570 senses this.

The elastic member 1585 transmits the pressure transmitted to the pressing plate 1525 to the support plate 1580, and simultaneously prevents the pressing plate 1525 from colliding with the support plate 1580 while receiving pressure.

The guide cylinder 1590 is disposed by penetrating through the guide hole 1714 of each jig plate 1530, and enables the jig plates 1530 to move along the axis formed by the guide cylinder 1590. Both ends of the guide cylinder 1590 are fixed to the respective fixing plates 1564 and 1568, and are disposed along the third axis by penetrating through the guide hole 1714 of each jig plate 1530. Accordingly, when the jig plate 1530 receives pressure from the jig press plate 1520, it can move along the guide cylinder 1590.

The above description is merely the exemplary description of the technical spirit of the present embodiment, and those skilled in the art to which the present embodiment pertains will be able to modify and change the present embodiment in various ways without departing from the essential characteristics of the present embodiment. Accordingly, the present embodiments are not intended to limit the technical spirit of the present embodiment, but are intended to describe the same, and the scope of the technical spirit of the present embodiment is not limited by these embodiments. The scope of the present embodiment should be construed by the appended claims, and all technical ideas within the equivalent scope should be construed as being included in the scope of the present embodiment.

## Claims

1. A transfer tray for arranging battery cells transferred thereto, the transfer tray comprising:
a frame providing a space in which the remaining components within the transfer tray are implemented;
a protrusion having a structure protruding in one axial direction of the frame;
a support sheet on which battery cells can be arranged;
a plurality of support sheet support portions, included in a number that is one more than the number of battery cells to be activated at one time, the plurality of support sheet support portions supporting the support sheet;
a guide portion implemented in a form connected to both ends within the frame in the one axial direction of the frame, allowing the support sheet support portions to move therealong; and
a restoring member disposed at each support sheet support portion and applying a restoring force to both support sheet support portions connected thereto.

2. The transfer tray of claim 1, wherein:
the protrusion has a structure protruding in a '⊏'-shaped (C-shaped) form.

3. The transfer tray of claim 1, wherein:
the protrusion is implemented on a long axis direction of the frame.

4. The transfer tray of claim 1, wherein:
the restoring member is implemented of a material having elasticity.

5. The transfer tray of claim 4, wherein:
the restoring member is implemented as a spring.

6. A transfer tray for arranging battery cells transferred thereto, the transfer tray comprising:
a frame providing a space in which the remaining components within the transfer tray are implemented;
a protrusion having a structure protruding in one axial direction of the frame;
a support sheet on which battery cells can be arranged;
a plurality of support sheet support portions, included in a number that is one more than the number of battery cells to be activated at one time, the plurality of support sheet support portions supporting the support sheet;
a guide portion implemented in a form connected to both ends within the frame in the one axial direction of the frame, allowing the support sheet support portions to move therealong; and
a restoring member disposed at each support sheet support portion and applying a restoring force to both support sheet support portions connected thereto,
wherein the transfer tray is moved at one time by the protrusion being gripped by an external device.

7. The transfer tray of claim 6, wherein:
the protrusion has a structure protruding in a '⊏'-shaped (C-shaped) form.

8. The transfer tray of claim 7, further comprising:
a reinforcing frame connected at one end to the frame and at another end to the protrusion, structurally reinforcing the protrusion.

9. The transfer tray of claim 6, wherein:
the protrusion is implemented on a long axis direction of the frame.

10. The transfer tray of claim 9, wherein:
the transfer tray is **characterized in that** the protrusion is gripped by an external device entering in the long axis direction of the frame.

11. A transfer tray for arranging battery cells transferred thereto, the transfer tray comprising:
a frame providing a space in which the remaining components within the transfer tray are implemented;
a protrusion having a structure protruding in one axial direction of the frame;
a support sheet on which battery cells can be arranged;
a plurality of support sheet support portions, included in a number that is one more than the number of battery cells to be activated at one time, the plurality of support sheet support portions supporting the support sheet;
a guide portion implemented in a form connected to both ends within the frame in the one axial direction of the frame, allowing the support sheet support portions to move therealong; and
a restoring member disposed at each support sheet support portion and applying a restoring force to both support sheet support portions connected thereto,
wherein the transfer tray is moved at one time by the protrusion being gripped by an external device, and the transfer tray is seated as a whole onto an activation device for activating battery cells.

12. The transfer tray of claim 11, wherein:
the frame is seated on the activation device.

13. The transfer tray of claim 11, wherein:
the restoring member enables both ends of the frame and the support sheet support portions to be spaced apart from each other.
